# EUROPEAN PATENT SPECIFICATION

(11) **EP 3 208 115 B1**
(45) Date of publication and mention of the grant of the patent: **04.03.2020**
(21) Application number: 15860814.1
(22) Date of filing: 18.11.2015
(51) Int. Cl.: B60C 11/16

(54) **PNEUMATIC TIRE**
LUFTREIFEN
PNEU

(30) Priority: 18.11.2014 JP 2014233886
(43) Date of publication of application: 23.08.2017
(73) Proprietor: The Yokohama Rubber Co., Ltd., Minato-ku Tokyo 105-8685 (JP)
(72) Inventor: MATSUMOTO, Kenichi, Hiratsuka-shi Kanagawa 254-8601 (JP)
(74) Representative: Dilg, Haeusler, Schindelmann Patentanwaltsgesellschaft mbH
(86) International application number: PCT/JP2015/082430
(87) International publication number: WO 2016/080454

(56) References cited:
- EP-A1- 1 199 193
- WO-A1-99/56976
- WO-A1-2004/103738
- WO-A1-2014/122570
- DE-U- 1 850 309
- FI-B- 123 781
- FR-A- 447 945
- JP-A- 2002 120 517
- JP-A- 2008 284 922
- JP-A- 2012 176 700
- US-A1- 2004 231 775
- US-A1- 2004 231 775

## Description

### Technical Field

The present invention relates to a pneumatic tire.

### Background Art

Pneumatic tires that include stud pins are known as winter tires. Stud pins include a body disposed in a hole provided in the tread portion of a pneumatic tire, and a tip protruding outward from the ground contact surface of the tread portion. Stud pins that have a round tip and stud pins that have a rectangular tip are known. Stud pins that have a rectangular tip have higher edge effects and greater contact area on icy road surfaces compared to stud pins that have a round tip. As such, stud pins that have a rectangular tip contribute to enhancements in the performance on ice of the pneumatic tire. Examples of pneumatic tires that include stud pins are described in Patent Literature 1 and Patent Literature 2.

### Citation List

### Patent Literature

Patent Literature 1: Japanese Unexamined Patent Application Publication No. 2008-284922A
Patent Literature 2: Japanese Unexamined Patent Application Publication No. 2012-176700A
Patent Literature 3: US 2004/231775 A1
Patent Literature 4: JP 2002 120517 A

### Summary of Invention

### Technical Problem

Pneumatic tires drive, brake, and turn. In the pneumatic tire market, braking performance on icy road surfaces tends to be important. As such, in many cases, stud pins that have a rectangular tip are provided in the tread portion such that a longitudinal side (longitudinal direction) of the tips and an axis of rotation (tire width direction) of the pneumatic tire are parallel to each other. When stud pins are disposed in the tread portion such that the longitudinal direction of the tips and the tire width direction are parallel to each other, turning performance on icy road surfaces may decline.

An object of an aspect of the present invention is to provide a pneumatic tire whereby both braking performance and turning performance on icy road surfaces can be achieved in a compatible manner.

### Solution to Problem

According to an aspect of the present invention, a pneumatic tire that rotates about a center axis is provided that includes a tread portion, and a stud pin including a body disposed in a hole provided in the tread portion and a rectangular tip protruding outward from a ground contact surface of the tread portion. In such a pneumatic tire, the stud pin is disposed such that a tip imaginary line, connecting a first end portion and a second end portion of the tip in a direction parallel to a longitudinal side of the tip, is inclined with respect to a reference imaginary line parallel to the center axis; and an angle α formed by the tip imaginary line and the reference imaginary line is not less than 10° and not greater than 60°.

According to this aspect of the present invention, the tip imaginary line of the rectangular tip is disposed so as to be inclined with respect to the reference imaginary line and, as such, the pneumatic tire can achieve both braking performance and turning performance on icy road surfaces in a compatible manner. Because the tip imaginary line is inclined with respect to the reference imaginary line, enhancements in edge effects of the tip and increases in contact area of the tip with respect to icy road surfaces can be achieved for each of the rotation direction of the pneumatic tire about the center axis (tire circumferential direction) and a direction parallel to the center axis (tire width direction). As such, both braking performance and turning performance of the pneumatic tire on icy road surfaces can be enhanced. If the angle α is greater than 60°, the edge effects and the contact area of the tip in the tire circumferential direction with respect to icy road surfaces will be smaller. As a result, braking performance on icy road surfaces may decline. If the angle α is less than 10°, the edge effects and the contact area of the tip in the tire width direction with respect to icy road surfaces will be smaller. As a result, turning performance on icy road surfaces may decline. When the angle α is not less than 10° and not greater than 60°, both braking performance and turning performance on icy road surfaces can be achieved in a compatible manner.

In an aspect of the present invention, a configuration is possible in which the angle α is not less than 25° and not greater than 45°.

As a result, reductions in the edge effects and the contact area of the tip in the tire circumferential direction with respect to icy road surfaces and reductions in the edge effects and the contact area of the tip in the tire width direction with respect to icy road surfaces are suppressed. Accordingly, both braking performance and turning performance on icy road surfaces can be achieved in a compatible manner.

In an aspect of the present invention, a configuration is possible in which an external form of the tip has line symmetry with respect to a symmetry axis; the tip imaginary line is orthogonal to the symmetry axis; and of an edge of the tip, the first end portion and the second end portion of the tip are portions separated farthest in a direction parallel to the tip imaginary line from the symmetry axis.

As a result, manufacturing costs of the stud pin are suppressed. Manufacturing costs can be suppressed to a great level when the external form of the tip has line symmetry compared to when the external form of the tip does not have line symmetry. Additionally, because the tip imaginary line is defined as the imaginary line connecting the first edge portion and the second edge portion of the tip, which are separated farthest from the symmetry axis, positioning of the stud pin in the tread portion is performed smoothly.

In an aspect of the present invention, a configuration is possible in which the tread portion includes a tread pattern for which a rotation direction about the center axis is specified; and the tip imaginary line of the stud pin disposed in a half region of the tread portion between a center portion of the tread portion and an edge portion of the tread portion in a direction parallel to the center axis is inclined to a trailing side of the tread portion from a side of the center portion toward a side of the edge portion.

As a result, the pneumatic tire can achieve both braking performance and turning performance on icy road surfaces in a compatible manner.

In an aspect of the present invention, a configuration is possible in which the edge of the tip includes a plurality of corner portions, and a plurality of line portions connected via the plurality of corner portions; and a longest line portion longest among the plurality of line portions is parallel to the tip imaginary line.

As a result, the angle of the longest line portion of the edge with respect to the reference imaginary line will be adjusted as a result of the angle formed by the tip imaginary line and the reference imaginary line being adjusted.

In an aspect of the present invention, a configuration is possible in which the edge of the tip includes a leading corner portion disposed farthest to a leading side of the tread portion among the plurality of corner portions, and a short line portion connected to the longest line portion via the leading corner portion; the longest line portion is inclined to the trailing side from the side of the center portion toward the side of the edge portion; and the short line portion is inclined to the trailing side from the side of the edge portion toward the side of the center portion.

As a result, the turning performance of the pneumatic tire can be enhanced.

In an aspect of the present invention, a configuration is possible in which an angle β1 formed by the longest line portion and the reference imaginary line is greater than an angle β2 formed by the short line portion and the reference imaginary line.

As a result, the turning performance of the pneumatic tire can be enhanced.

In an aspect of the present invention, a configuration is possible in which the edge of the tip includes a leading corner portion disposed farthest to a leading side of the tread portion among the plurality of corner portions, and a short line portion connected to the longest line portion via the leading corner portion; the longest line portion is inclined to the trailing side from the side of the center portion toward the side of the edge portion; and the short line portion is parallel to the reference imaginary line.

As a result, the pneumatic tire can achieve both braking performance and turning performance on icy road surfaces in a compatible manner.

In an aspect of the present invention, a configuration is possible in which the half region includes, in the direction parallel to the center axis, a first belt region between the center portion and a middle portion disposed outward from the center portion in a dimension exactly 25% of the tread portion, and a second belt region between the middle portion and the edge portion; and the stud pin is disposed in at least the second belt region.

As a result, the stud pin is disposed in the second belt region that includes the shoulder regions of the tread portion and, as such, turning performance on icy road surfaces is enhanced.

In an aspect of the present invention, a configuration is possible in which a plurality of the stud pins are disposed in the second belt region; and the tip imaginary line, of each of a number of stud pins of the plurality of the stud pins equal to at least 60% of a total number of the plurality of the stud pins in the second belt region, is inclined with respect to the reference imaginary line.

As a result, of the plurality of stud pins disposed in the second belt region, a majority of the stud pins are disposed inclining with respect to the reference imaginary line. As such, the pneumatic tire can achieve both braking performance and turning performance on icy road surfaces in a compatible manner. Note that a configuration is possible in which the tip imaginary line of each of a number of stud pins of the plurality of the stud pins equal to at least 80% of a total number of the plurality of the stud pins in the second belt region is inclined with respect to the reference imaginary line.

In an aspect of the present invention, a configuration is possible in which the stud pin is disposed in each of the first belt region and the second belt region; and an angle α2 formed by the tip imaginary line of the stud pin disposed in the second belt region and the reference imaginary line is greater than an angle α1 formed by the tip imaginary line of the stud pin disposed in the first belt region and the reference imaginary line.

As a result, the stud pin is disposed in the first belt region that includes the center region of the tread portion, and the stud pin is disposed in the second belt region that includes the shoulder region of the tread portion and, as such, the pneumatic tire can achieve both braking performance and turning performance on icy road surfaces in a compatible manner. Because the stud pin is disposed in the first belt region, which includes the center region of the tread portion, at the small angle α1, braking performance is enhanced. Because the stud pin is disposed in the second belt region, which includes the shoulder region of the tread portion, at the large angle a2, turning performance is enhanced.

In an aspect of the present invention, a configuration is possible in which a difference between the angle α1 and the angle α2 is not less than 10°.

As a result, enhancements in edge effects of the tip and increases in contact area of the tip with respect to icy road surfaces can be achieved for each of the tire circumferential direction and the tire width direction. If the difference between the angle α1 and the angle α2 is less than 10°, the stud pin disposed in the first belt region and the stud pin disposed in the second belt region will substantially face the same direction. In this case, edge effects are not dispersed. Because the difference between the angle α1 and the angle α2 is not less than 10°, the stud pin disposed in the first belt region and the stud pin disposed in the second belt region face different directions. As a result, unbalancing of the edge effects is suppressed and, as such, the pneumatic tire can achieve both braking performance and turning performance on icy road surfaces in a compatible manner. Note that a configuration is also possible in which the difference between the angle α1 and the angle α2 is not less than 20° and not greater than 30°.

In an aspect of the present invention, a configuration is possible in which the half region includes, in the direction parallel to the center axis, a first half region between the center portion and a first edge portion of the tread portion, and a second half region between the center portion and a second edge portion of the tread portion; the stud pin is disposed in each of the first half region and the second half region; a number of the stud pin in the first half region is equivalent to a number of the stud pin in the second half region; and the angle α of the stud pin disposed at a predetermined distance from the center portion in the first half region is substantially equivalent to the angle α of the stud pin disposed at a predetermined distance from the center portion in the second half region.

As a result, the stud pin disposed in the first half region and the stud pin disposed in the second half region are disposed with line symmetry with respect to the symmetry axis that passes through the center portion. As such, the pneumatic tire can achieve both braking performance and turning performance on icy road surfaces in a compatible manner.

In an aspect of the present invention, a configuration is possible in which the tread portion includes a tread pattern for which a rotation direction about the center axis is specified; and the tip imaginary line of the stud pin disposed in a half region of the tread portion between a center portion of the tread portion and an edge portion of the tread portion in a direction parallel to the center axis is inclined to a leading side of the tread portion from a side of the center portion toward a side of the edge portion.

As a result, the pneumatic tire can achieve both braking performance and turning performance on icy road surfaces in a compatible manner.

In an aspect of the present invention, a configuration is possible in which the edge of the tip includes a plurality of corner portions, and a plurality of line portions connected via the plurality of corner portions; and a longest line portion longest among the plurality of line portions is parallel to the tip imaginary line.

As a result, the angle of the longest line portion of the edge with respect to the reference imaginary line will be adjusted as a result of the angle formed by the tip imaginary line and the reference imaginary line being adjusted.

In an aspect of the present invention, a configuration is possible in which the edge of the tip includes a leading corner portion disposed farthest to the leading side among the plurality of corner portions, and a short line portion connected to the longest line portion via the leading corner portion; the longest line portion is inclined to the leading side from the side of the center portion toward the side of the edge portion; and the short line portion is inclined to the leading side from the side of the edge portion toward the side of the center portion.

As a result, the turning performance of the pneumatic tire can be enhanced.

In an aspect of the present invention, a configuration is possible in which an angle β1 formed by the longest line portion and the reference imaginary line is greater than an angle β2 formed by the short line portion and the reference imaginary line.

As a result, the turning performance of the pneumatic tire can be enhanced.

In an aspect of the present invention, a configuration is possible in which the edge of the tip includes a leading corner portion disposed farthest to a leading side among the plurality of corner portions, and a short line portion connected to the longest line portion via the leading corner portion; the longest line portion is inclined to the leading side from the side of the center portion toward the side of the edge portion; and the short line portion is parallel to the reference imaginary line.

As a result, the pneumatic tire can achieve both braking performance and turning performance on icy road surfaces in a compatible manner.

In an aspect of the present invention, a configuration is possible in which the half region includes, in the direction parallel to the center axis, a first belt region between the center portion and a middle portion disposed outward from the center portion in a dimension exactly 25% of the tread portion, and a second belt region between the middle portion and the edge portion; and the stud pin is disposed in at least the second belt region.

As a result, the stud pin is disposed in the second belt region that includes the shoulder region of the tread portion and, as such, turning performance on icy road surfaces is enhanced.

In an aspect of the present invention, a configuration is possible in which a plurality of the stud pins are disposed in the second belt region; and the tip imaginary line, of each of a number of stud pins of the plurality of the stud pins equal to at least 60% of a total number of the plurality of the stud pins in the second belt region, is inclined with respect to the reference imaginary line.

As a result, of the plurality of stud pins disposed in the second belt region, a majority of the stud pins are disposed inclining with respect to the reference imaginary line. As such, the pneumatic tire can achieve both braking performance and turning performance on icy road surfaces in a compatible manner. Note that a configuration is possible in which the tip imaginary line of each of a number of stud pins of the plurality of the stud pins equal to at least 80% of a total number of the plurality of the stud pins in the second belt region is inclined with respect to the reference imaginary line.

In an aspect of the present invention, a configuration is possible in which the stud pin is disposed in each of the first belt region and the second belt region; and an angle α2 formed by the tip imaginary line of the stud pin disposed in the second belt region and the reference imaginary line is greater than an angle α1 formed by the tip imaginary line of the stud pin disposed in the first belt region and the reference imaginary line.

As a result, the stud pin is disposed in the first belt region that includes the center region of the tread portion, and the stud pin is disposed in the second belt region that includes the shoulder region of the tread portion and, as such, the pneumatic tire can achieve both braking performance and turning performance on icy road surfaces in a compatible manner. Because the stud pin is disposed in the first belt region, which includes the center region of the tread portion, at the small angle α1, braking performance is enhanced. Because the stud pin is disposed in the second belt region, which includes the shoulder region of the tread portion, at the large angle a2, turning performance is enhanced.

In an aspect of the present invention, a configuration is possible in which a difference between the angle α1 and the angle α2 is not less than 10°.

As a result, enhancements in edge effects of the tip and increases in contact area of the tip with respect to icy road surfaces can be achieved for each of the tire circumferential direction and the tire width direction. If the difference between the angle α1 and the angle α2 is less than 10°, the stud pin disposed in the first belt region and the stud pin disposed in the second belt region will substantially face the same direction. In this case, edge effects are not dispersed. Because the difference between the angle α1 and the angle α2 is not less than 10°, the stud pin disposed in the first belt region and the stud pin disposed in the second belt region face different directions. As a result, unbalancing of the edge effects is suppressed and, as such, the pneumatic tire can achieve both braking performance and turning performance on icy road surfaces in a compatible manner. Note that a configuration is also possible in which the difference between the angle α1 and the angle α2 is not less than 20° and not greater than 30°.

In an aspect of the present invention, a configuration is possible in which the half region includes, in the direction parallel to the center axis, a first half region between the center portion and a first edge portion of the tread portion, and a second half region between the center portion and a second edge portion of the tread portion; the stud pin is disposed in each of the first half region and the second half region; a number of the stud pin in the first half region is equivalent to a number of the stud pin in the second half region; and the angle α of the stud pin disposed at a predetermined distance from the center portion in the first half region is substantially equivalent to the angle α of the stud pin disposed at a predetermined distance from the center portion in the second half region.

As a result, the stud pin disposed in the first half region and the stud pin disposed in the second half region are disposed with line symmetry with respect to the symmetry axis that passes through the center portion. As such, the pneumatic tire can achieve both braking performance and turning performance on icy road surfaces in a compatible manner.

### Advantageous Effects of Invention

According to the present invention, a pneumatic tire is provided whereby both braking performance and turning performance on icy road surfaces can be achieved in a compatible manner.

### Brief Description of Drawings

FIG. 1 is a cross-sectional view illustrating a portion of a pneumatic tire according to a first embodiment.
FIG. 2 is a cross-sectional view illustrating a portion of the pneumatic tire according to the first embodiment.
FIG. 3 is a plan view illustrating an example of a tread portion of the pneumatic tire according to the first embodiment.
FIG. 4 is a drawing illustrating an example of a stud pin disposed in a hole in the tread portion according to the first embodiment.
FIG. 5 is a perspective view illustrating an example of the stud pin according to the first embodiment.
FIG. 6 is a plan view schematically illustrating an example of a tip of the stud pin according to the first embodiment.
FIG. 7 is a plan view schematically illustrating an example of the tip of the stud pin according to the first embodiment.
FIG. 8 is a plan view schematically illustrating an example of the tread portion and the tips of the pneumatic tire according to the first embodiment.
FIG. 9 is a plan view schematically illustrating an example of the tread portion and the tips of the pneumatic tire according to the first embodiment.
FIG. 10 is a plan view schematically illustrating an example of the tip of the stud pin according to the first embodiment.
FIG. 11 is a plan view schematically illustrating an example of the tip of the stud pin according to the first embodiment.
FIG. 12 is a plan view schematically illustrating an example of a tip of a stud pin according to a second embodiment.
FIG. 13 is a plan view schematically illustrating an example of the tip of the stud pin according to the second embodiment.
FIG. 14 is a plan view schematically illustrating an example of a tip of a stud pin according to a third embodiment.
FIG. 15 is a plan view schematically illustrating an example of the tip of the stud pin according to the third embodiment.
FIG. 16 is a plan view schematically illustrating an example of a tip of a stud pin according to a fourth embodiment.
FIG. 17 is a plan view schematically illustrating an example of the tip of the stud pin according to the fourth embodiment.
FIG. 18 is a plan view schematically illustrating an example of a tip of a stud pin according to a fifth embodiment.
FIG. 19 is a plan view schematically illustrating an example of the tip of the stud pin according to the fifth embodiment.
FIG. 20 is a plan view schematically illustrating an example of a tip of a stud pin according to a sixth embodiment.
FIG. 21 is a plan view schematically illustrating an example of a tip of a stud pin according to a seventh embodiment.
FIG. 22 is a plan view schematically illustrating an example of a tip of a stud pin according to an eighth embodiment.
FIG. 23 is a plan view schematically illustrating an example of a tip of a stud pin according to a ninth embodiment.
FIG. 24 is a plan view schematically illustrating an example of a tread portion of a pneumatic tire according to a tenth embodiment.
FIG. 25 is a plan view schematically illustrating an example of the tread portion and tips of the pneumatic tire according to the tenth embodiment.
FIG. 26 is a plan view schematically illustrating an example of a tip of a stud pin according to the tenth embodiment.
FIG. 27 is a plan view schematically illustrating an example of the tip of the stud pin according to the tenth embodiment.
FIG. 28 is a plan view schematically illustrating an example of a tip of a stud pin according to an eleventh embodiment.
FIG. 29 is a plan view schematically illustrating an example of a tip of a stud pin according to a twelfth embodiment.
FIG. 30 is a plan view schematically illustrating an example of a tip of a stud pin according to a thirteenth embodiment.
FIG. 31 is a plan view schematically illustrating an example of a tip of a stud pin according to a fourteenth embodiment.
FIG. 32 is a plan view schematically illustrating an example of a tip of a stud pin according to a fifteenth embodiment.
FIG. 33 is a plan view schematically illustrating an example of a tip of a stud pin according to a sixteenth embodiment.
FIG. 34 is a plan view schematically illustrating an example of a tip of a stud pin according to a seventeenth embodiment.
FIG. 35 is a plan view schematically illustrating an example of a tip of a stud pin according to an eighteenth embodiment.
FIG. 36 is a table showing results of performance testing of pneumatic tires according to examples of the present invention.

### Description of Embodiments

Embodiments according to the present invention will be described with reference to the appended drawings. However, the present invention is not limited to those embodiments. The constituents of the embodiments described below can be combined with one another as appropriate. In addition, some of the constituents may not be used in some cases.

In the description below, an X-Y-Z Cartesian coordinates system is used, and a positional relationship of each portion is described with reference to the X-Y-Z Cartesian coordinates system. One of directions in a horizontal plane is defined as an X-axis direction, a direction orthogonal to the X-axis direction in the horizontal plane is defined as a Y-axis direction, and a direction orthogonal to each of the X-axis direction and the Y-axis direction is defined as a Z-axis direction. Further, rotational (inclination) directions around the X axis, Y axis, and the Z axis are defined as directions θX, θY, and θZ, respectively.

### First Embodiment

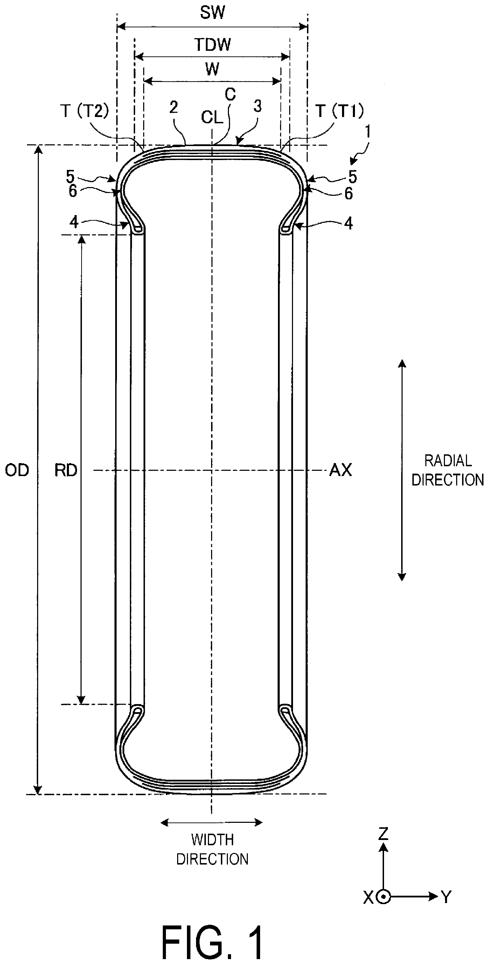

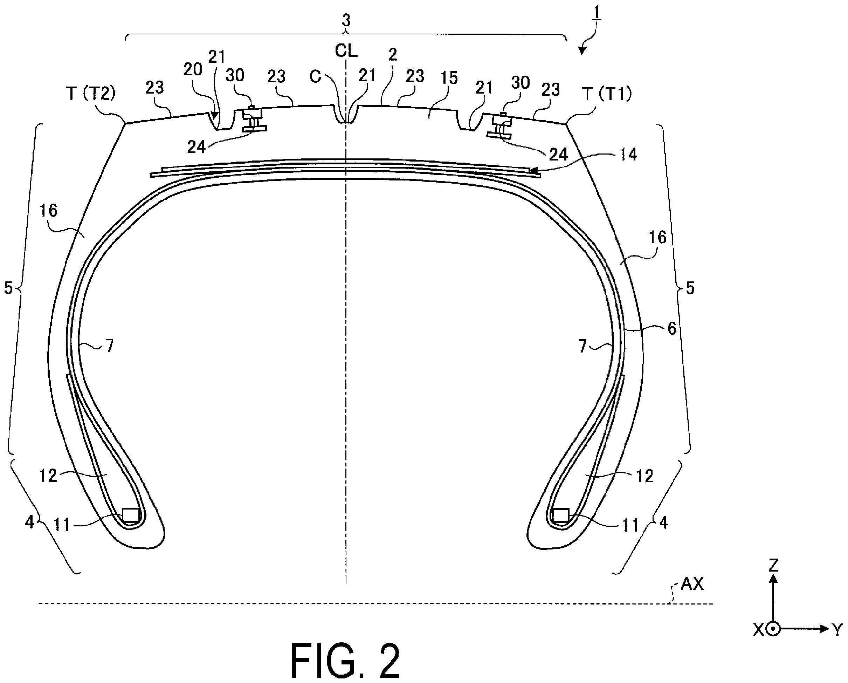

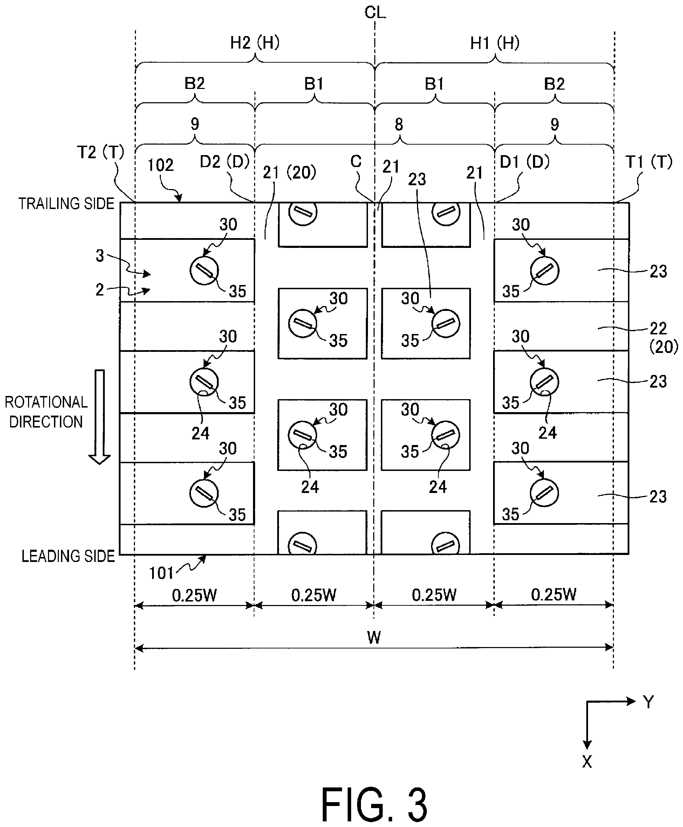

A first embodiment will now be described. FIG. 1 is a cross-sectional view illustrating an example of a pneumatic tire 1 according to the present embodiment. FIG. 2 is an enlarged cross-sectional view of a portion of the pneumatic tire 1 according to the present embodiment. FIGS. 1 and 2 each depict a meridian cross-section passing through a center axis AX of the pneumatic tire 1. FIG. 3 is a plan view illustrating an example of a tread portion 3 of the pneumatic tire 1 according to the present embodiment. In the following description, the pneumatic tire 1 is also referred as the tire 1 for convenience.

The tire 1 rotates about the center axis (axis of rotation) AX. The center axis AX of the tire 1 is orthogonal to an equatorial plane (equator line, center line) CL of the tire 1.

In the following description, a rotational direction about the axis of rotation AX is referred to as the circumferential direction (or the tire circumferential direction) for convenience, a direction parallel to the axis of rotation AX is referred to as the width direction (or the tire width direction) for convenience, and a radiation direction with respect to the axis of rotation AX is referred to as the radial direction (or the tire radial direction) for convenience. The circumferential direction indicates a circumferential direction of the center axis AX or a circumferential direction of the tire 1. The width direction indicates a width direction of the tire 1. The radial direction indicates a radial direction of the tire 1.

In the present embodiment, the center axis AX of the tire 1 is parallel to the Y axis. That is, in the present embodiment, the direction parallel to the center axis AX is the Y-axis direction. The Y-axis direction is a width direction of the tire 1 or a vehicle width direction. The equatorial plane (equator line, center line) CL of the tire 1 passes through the center of the tire 1 in the Y-axis direction. A θY-direction is the rotational direction of the tire 1 (the center axis AX). The X-axis direction and the Z-axis direction are radiation directions with respect to the center axis AX. The road surface (ground surface) on which the tire 1 travels (rolls) is substantially parallel to the X-Y plane.

In the present embodiment, the tire 1 is a winter tire (snowy and icy road tire) that includes a stud pin 30. The tire 1 that includes the stud pin 30 may be referred to as a studded tire 1, or as a spiked tire 1.

As illustrated in FIGS. 1, 2, and 3, the tire 1 is provided with the tread portion 3 that includes a ground contact surface 2, bead portions 4 that connect to a rim, and sidewall portions 5 that connect the tread portion 3 and the bead portions 4. The ground contact surface 2 contacts the road surface (the ground surface) when the tire 1 is traveling.

The tire 1 includes a carcass 6 and an inner liner 7. The carcass 6 is the frame of the tire 1 and maintains the shape of the tire 1. The inner liner 7 is disposed so as to face interior space of the tire 1. The carcass 6 and the inner liner 7 are disposed in the tread portion 3, the bead portions 4, and the sidewall portions 5.

The bead portions 4 include a bead core 11 and a bead filler 12. The bead core 11 fixes the tire 1 to the rim. The bead core 11 is disposed on both sides in the width direction of the center line CL of the tire 1. The bead core 11 includes a plurality of high carbon steel annular members that are bundled. The bead core 11 is disposed so as to surround the axis of rotation AX. The bead filler 12 increases the rigidity of the bead portions 4.

The tread portion 3 includes a belt 14 and tread rubber 15. The belt 14 includes a plurality of layered belt members. The belt 14 is disposed on an outer side in the radial direction of the carcass 6. The belt 14 tightens the carcass 6 and increases the rigidity of the tread portion 3. A tread pattern is formed in the tread rubber 15. The tread rubber 15 is disposed on an outer side in the radial direction of the carcass 6 and the belt 14. The ground contact surface 2 is disposed on the tread rubber 15.

The sidewall portions 5 include sidewall rubber 16. The sidewall portions 5 are disposed on both sides in the width direction of the center line CL.

The carcass 6 is disposed in a toroidal shape between the bead core 11 on a first side of the center line CL in the width direction and the bead core 11 on a second side of the center line CL in the width direction. Each edge of the carcass 6 folds back so as to surround the bead filler 12.

Grooves 20 are formed in the tread rubber 15. The tread pattern is formed by the grooves 20. The grooves 20 include main grooves 21 formed in the circumferential direction of the tire 1, and lug grooves 22 formed in the width direction of the tire 1. Blocks 23 are formed by the tread rubber 15 being partitioned by the main grooves 21 and the lug grooves 22. The ground contact surface 2 includes a surface of the blocks 23.

In the present embodiment, the tread portion 3 includes a tread pattern for which the rotational direction about the center axis AX is specified. In the example illustrated in FIG. 3, the rotational direction of the tire 1 is specified by the direction indicated by the arrow. One of a first edge portion and a second edge portion in the circumferential direction of a predetermined region of the tread portion 3 is a leading portion 101 and the other is a trailing portion 102. In FIG. 3, the X-axis direction indicates the rotational direction of the tire 1. The leading portion 101 is disposed more to the +X side than the trailing portion 102. Here, the term "leading portion 101" refers to the portion of a predetermined region of the tread portion 3 (e.g. a pitch region or a block region) that contacts the road surface first when the tire 1 is traveling on the road surface while rotating about the center axis AX. The term "trailing portion 102" refers to the portion of a predetermined region of the tread portion 3 that contacts the road surface last when the tire 1 is traveling on the road surface while rotating about the center axis AX.

In the following description, the leading portion 101 side (+X side) is referred to as the leading side for convenience, and the trailing portion 102 side (-X side) is referred to as the trailing side for convenience.

As illustrated in FIG. 1, in the present embodiment, a tire outer diameter is OD. A tire rim diameter is RD. A total tire width is SW. A tread ground contact width is W. A developed tread width is TDW.

The term "tire outer diameter OD" refers to a diameter of the tire 1 in a state where the tire 1 is mounted on a standard rim, the interior of the tire 1 is filled with air to a standard pressure (e.g. 230 kPa), and the tire 1 is not subjected to a load.

The term "tire rim diameter RD" refers to a rim diameter of a wheel on which the tire 1 is fitted. The tire rim diameter RD is equivalent to a tire inner diameter.

The term "total tire width SW" refers to a maximum dimension of the tire 1 in the direction parallel to the center axis AX, in a state where the tire 1 is mounted on a standard rim, the interior of the tire 1 is filled with air, and the tire 1 is not subjected to a load. That is, the term "total tire width SW" refers to a distance from the portion farthest to the +Y side of the sidewall portion 5 disposed on the +Y side of the tread rubber 15 to the portion farthest to the -Y side of the sidewall portion 5 disposed on the -Y side of the tread rubber 15. In cases where a structure projecting from a surface of the sidewall portion 5 is provided on the surface of the sidewall portion 5, the term "total tire width SW" refers to the maximum dimension to the tire 1 in the Y-axis direction, including that structure. The structure projecting from the surface of the sidewall portion 5 includes at least one of alphanumerics, marks, and patterns formed by at least a portion of the sidewall rubber 16 in the sidewall portion 5.

The term "tread ground contact width W" refers to a maximum dimension (maximum width) in the direction parallel to the center axis AX of a ground contact region of the tread portion 3. The term "ground contact region of the tread portion 3" refers to a ground contact region of the tire 1 in a state where the tire 1 is mounted on a standard rim, the interior of the tire 1 is filled with air to a standard pressure (e.g. 230 kPa), a load equivalent to 80% of load capacity of the tire 1 is applied to the tire 1, and the tire 1 is brought into contact with a flat road surface.

The term "developed tread width TDW" refers to a linear distance between both edges of a developed view of the tread portion 3 of the tire 1 in a state where the tire 1 is mounted on a standard rim, the interior of the tire 1 is filled with air to a standard pressure (e.g. 230 kPa), and the tire 1 is not subjected to a load.

In the following description, a center in the width direction of the tread portion 3 is referred to as a center portion C of the tread portion 3 for convenience, and an edge in the width direction of the tread portion 3 is referred to as an edge portion T of the tread portion 3 for convenience. The center portion C crosses the center line (equator line) CL. The center portion C includes a center portion in the width direction of the tread ground contact width W. The edge portion T includes an edge portion in the width direction of the tread ground contact width W. The edge portion T of the tread portion 3 includes, in the width direction, an edge portion T1 farther to a first side (the +Y side) than the center portion C, and an edge portion T2 farther to a second side (the -Y side) than the center portion C.

As illustrated in FIG. 3, in the present embodiment, a region between the center portion C of the tread portion 3 and the edge portion T of the tread portion 3 in the width direction is referred to as a half region H for convenience.

The half region H includes, in the width direction, a first belt region B1 between the center portion C and a middle portion D, and a second belt region B2 between the middle portion D and the edge portion T. The middle portion D is a portion disposed outward from the center portion C in a dimension exactly 25% of the tread portion 3 (the tread ground contact width W). That is, a distance in the width direction between the center portion C and the middle portion D is 0.25W. A distance in the width direction between the middle portion D and the edge portion T is 0.25W.

The edge portion T of the tread portion 3 includes, in the width direction, the edge portion T1 on the first side (the +Y side), and the edge portion T2 on the second side (the -Y side).

The half region H includes, in the width direction, a first half region H1 between the center portion C and the first edge portion T1 of the tread portion 3, and a second half region H2 between the center portion C and the second edge portion T2 of the tread portion 3.

The first belt region B1 and the second belt region B2 are disposed in each of the first half region H1 and the second half region H2.

The middle portion D includes a middle portion D1 of the first half region H1, and a middle portion D2 of the second half region H2.

The first half region H1 includes the first belt region B1 between the center portion C and the middle portion D1, and the second belt region B2 between the middle portion D1 and the edge portion T1. The second half region H2 includes the first belt region B1 between the center portion C and the middle portion D2, and the second belt region B2 between the middle portion D2 and the edge portion T2.

In the present embodiment, a center region 8 of the tread portion 3 includes the first belt region B1 of the first half region H1 and the first belt region B1 of the second half region H2. A shoulder region 9 of the tread portion 3 is disposed in the second belt region B2 of the first half region H1. The shoulder region 9 of the tread portion 3 is also disposed in the second belt region B2 of the second half region H2.

In the present embodiment, the tire 1 includes the stud pin 30. The stud pin 30 is disposed in the blocks 23 of the tread portion 3. A hole 24 is formed in the tread rubber 15 of the tread portion 3 (the blocks 23). At least a portion of the stud pin 30 is disposed in the hole 24 provided in the tread portion 3. The stud pin 30 is supported by an inner surface of the hole 24 so that at least a portion of the stud pin 30 projects from the ground contact surface 2 of the tread portion 3. Note that the hole 24 may also be referred to as the stud pin hole 24.

The hole 24 may, for example, be formed together with the grooves 20 in a vulcanization step, which is one of the manufacturing steps of the tire 1. The hole 24 may also be formed after the vulcanization step, by subjecting the tread rubber 15 to drilling.

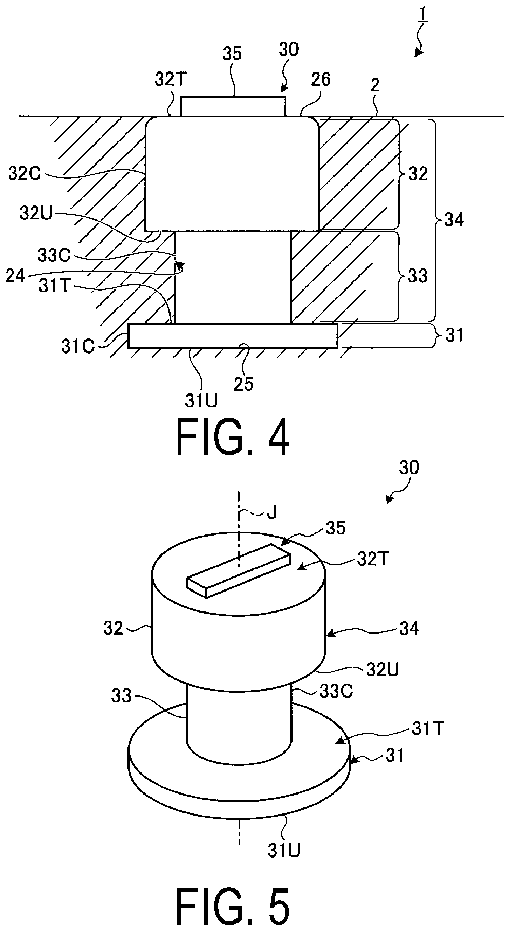

FIG. 4 is a drawing illustrating an example of the stud pin 30 disposed in the hole 24 in the tread portion 3 according to the present embodiment. FIG. 5 is a perspective view illustrating an example of the stud pin 30 according to the present embodiment.

As illustrated in FIGS. 4 and 5, the stud pin 30 is provided with a bottom flange portion 31 disposed in the hole 24 provided in the tread portion 3, a body 34 disposed in the hole 24, and a tip 35 supported on the body 34. The body 34 includes an upper flange portion 32 and a middle portion 33. The bottom flange portion 31 and the body 34 are integrated (are a single member).

The hole 24 has a bottom surface 25. An opening 26 is provided at a top edge portion of the hole 24. The ground contact surface 2 is disposed around the opening 26. The stud pin 30 is inserted into the hole 24 through the opening 26 of the hole 24. As a result, at least a portion of the stud pin 30 is disposed inside the hole 24. In the present embodiment, at least the bottom flange portion 31 and the body 34 are disposed inside the hole 24. The tip 35 is disposed so as to protrude outward from the ground contact surface 2 of the tread portion 3 while the bottom flange portion 31 and the body 34 are disposed inside the hole 24.

The bottom flange portion 31 includes a bottom surface (first surface) 31U facing the bottom surface 25 of the hole 24, a top surface (second surface) 31T facing a direction opposite the bottom surface 31U, and a side surface 31C connecting a peripheral portion of the bottom surface 31U and a peripheral portion of the top surface 31T.

The upper flange portion 32 includes a top surface (third surface) 32T disposed around the tip 35, a bottom surface (fourth surface) 32U facing a direction opposite the top surface 32T, and a side surface 32C connecting a peripheral portion of the top surface 32T and a peripheral portion of the bottom surface 32U.

The middle portion 33 includes a side surface 33C.

An outer surface (surface) of the body 34 includes the top surface 32T, the bottom surface 32U, the side surface 32C, and the side surface 33C. An outer surface (surface) of the bottom flange portion 31 includes the bottom surface 31U, the top surface 31T, and the side surface 31C. An outer surface (surface) of the stud pin 30 includes the outer surface of the bottom flange portion 31, the outer surface of the body 34, and an outer surface of the tip 35.

The body 34 is connected to the top surface 31T of the bottom flange portion 31. The body 34 is disposed on an outer side of the bottom flange portion 31 in the radial direction. The upper flange portion 32 is disposed on an outer side of the middle portion 33 in the radial direction. The middle portion 33 is disposed between the bottom flange portion 31 and the upper flange portion 32 in the radial direction.

In the present embodiment, the middle portion 33 of the body 34 is connected to the bottom flange portion 31. The side surface 33C of the middle portion 33 is connected to the top surface 31T of the bottom flange portion 31. The side surface 33C of the middle portion 33 is connected to the bottom surface 32U of the upper flange portion 32. The middle portion 33 is disposed between the bottom surface 32U and the top surface 31T.

The top surface 31T, the bottom surface 31U, the top surface 32T, and the bottom surface 32U are each flat. The side surface 33C is substantially orthogonal to the top surface 31T. The side surface 33C is substantially orthogonal to the bottom surface 32U. Note that a configuration is possible in which a recess is provided in at least a portion of the bottom surface 31U.

As illustrated in FIG. 5, the stud pin 30 is disposed around a center axis J that passes through the tip 35. The tip 35 is rectangular in a plane orthogonal to the center axis J. That is, in the present embodiment, the stud pin 30 is a so-called rectangular stud pin. The bottom flange portion 31 and the body 34 may have rectangular shapes in the plane orthogonal to the center axis J that are long in a direction parallel to the longitudinal side of the tip 35.

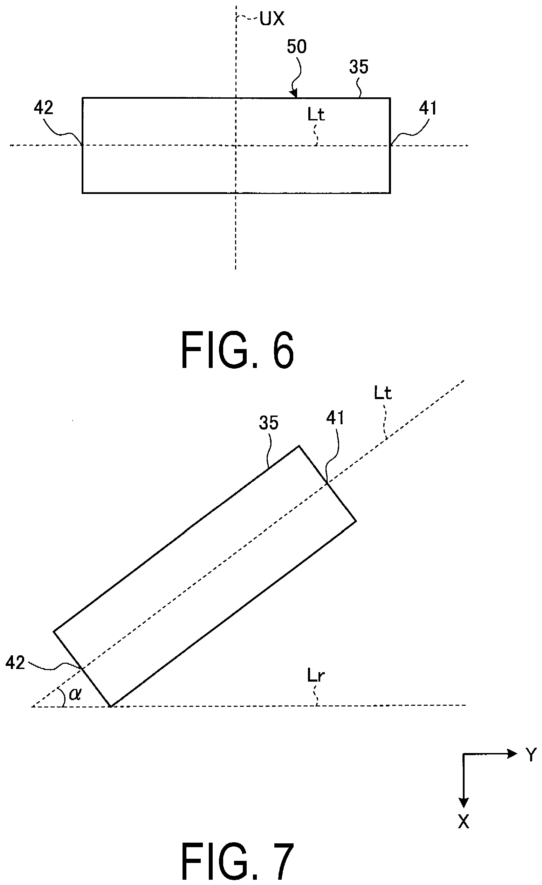

FIG. 6 is a drawing schematically illustrating an example of the tip 35 according to the present embodiment, in the plane orthogonal to the center axis J. The plane orthogonal to the center axis J is substantially parallel to the ground contact surface 2 of the tread portion 3.

As illustrated in FIG, 6, the tip 35 is long in a predetermined direction in the plane orthogonal to the center axis J. In the following description, the direction parallel to the longitudinal side of the tip 35 is referred to as the longitudinal direction for convenience.

In the present embodiment, an external form of the tip 35 in the plane orthogonal to the center axis J has line symmetry with respect to a symmetry axis UX.

In the present embodiment, a tip imaginary line Lt is defined by a first edge portion 41 of the tip 35 and a second edge portion 42 of the tip 35 in the longitudinal direction. The tip imaginary line Lt connects the edge portion 41 and the edge portion 42.

The tip imaginary line Lt is orthogonal to the symmetry axis UX. The first edge portion 41 of the tip 35 is disposed on a first side of the symmetry axis UX. The second edge portion 42 of the tip 35 is disposed on a second side of the symmetry axis UX. Of an edge 50 of the tip 35, the first edge portion 41 and the second edge portion 42 of the tip 35 are portions separated farthest in a direction parallel to the tip imaginary line Lt from the symmetry axis UX.

In the present embodiment, an external form of the tip 35 in the plane orthogonal to the center axis J is rectangular. The tip imaginary line Lt passes through the center of the tip 35.

FIG. 7 is a plan view illustrating an example of the tip 35 of the stud pin 30 according to the present embodiment. FIG. 7 illustrates an example of the stud pin 30 in the plane orthogonal to the center axis J. The body 34 of the stud pin 30 is disposed in the hole 24 in the tread portion 3. The rectangular tip 35 is disposed so as to protrude outward from the ground contact surface 2 of the tread portion 3.

As illustrated in FIG. 7, in the present embodiment, the stud pin 30 is disposed such that the tip imaginary line Lt connecting the first edge portion 41 and the second edge portion 42 of the tip 35 is inclined with respect to a reference imaginary line Lr parallel to the center axis AX. The reference imaginary line Lr is parallel to the Y axis.

In the present embodiment, an angle α formed by the tip imaginary line Lt and the reference imaginary line Lr is not less than 10° and not greater than 60°.

Note that a configuration is possible in which the angle α is not less than 25° and not greater than 45°.

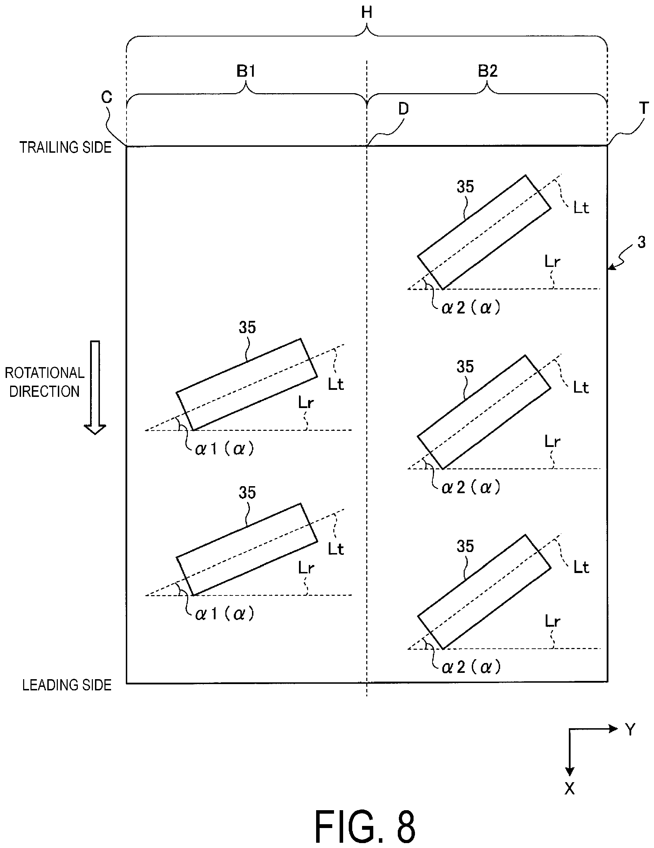

FIG. 8 is a drawing schematically illustrating an example of the tip 35 of the stud pin 30 according to the present embodiment, disposed in the half region H of the tread portion 3. In FIG. 8, the blocks 23 are not depicted.

In FIG. 8, the tire 1 is configured to rotate in the direction indicated by the arrow. In FIG. 8, the rotational direction of the tire 1 matches the X-axis direction. In FIG. 8, the lower portion of the tread portion 3 is the leading side. The upper portion of the tread portion 3 is the trailing side.

As illustrated in FIG. 8, in the present embodiment, the tip imaginary line Lt of the tip 35 of the stud pin 30 disposed in the half region H of the tread portion 3 is inclined to the trailing side of the tread portion 3 from the center portion C side toward the edge portion T side of the tread portion 3.

A plurality of the stud pin 30 are disposed in the tread portion 3. The stud pin 30 is disposed in at least the second belt region B2. A plurality of the stud pin 30 are disposed in the second belt region B2. In the example illustrated in FIG. 8, the plurality stud pins 30 are disposed in the circumferential direction in the second belt region B2. A configuration is possible in which the plurality of stud pins 30 are disposed in the width direction in the second belt region B2.

In the present embodiment, the tip imaginary line Lt of each of the tips 35 of a number of stud pins 30 equal to at least 60% of the total number of stud pins 30 in the second belt region B2 is inclined with respect to the reference imaginary line Lr. Note that a configuration is possible in which the tip imaginary line Lt of each of the tips 35 of a number of stud pins 30 equal to at least 80% of the total number of stud pins 30 in the second belt region B2 is inclined with respect to the reference imaginary line Lr.

As illustrated in FIG. 8, in the present embodiment, the stud pins 30 are disposed in each of the first belt region B1 and the second belt region B2. A plurality of the stud pin 30 are disposed in the first belt region B1. In the example illustrated in FIG. 8, the plurality stud pins 30 are disposed in the circumferential direction in the first belt region B1. A configuration is possible in which the plurality of stud pins 30 are disposed in the width direction in the first belt region B1.

In the present embodiment, the tip imaginary line Lt of each of the tips 35 of a number of stud pins 30 equal to at least 60% of the total number of stud pins 30 in the first belt region B1 is inclined with respect to the reference imaginary line Lr. Note that a configuration is possible in which the tip imaginary line Lt of each of the tips 35 of a number of stud pins 30 equal to at least 80% of the total number of stud pins 30 in the first belt region B1 is inclined with respect to the reference imaginary line Lr.

In the following description, the angle α formed by the reference imaginary line Lr and the tip imaginary line Lt of the tip 35 of the stud pin 30 disposed in the first belt region B1 is referred to as an angle α1 for convenience. The angle α formed by the reference imaginary line Lr and the tip imaginary line Lt of the tip 35 of the stud pin 30 disposed in the second belt region B2 is referred to as an angle α2 for convenience. The angle α includes the angle α1 and the angle a2.

In the present embodiment, the angle α2 formed by the reference imaginary line Lr and the tip imaginary line Lt of the tip 35 of the stud pin 30 disposed in the second belt region B2 is greater than the angle α1 formed by the reference imaginary line Lr and the tip imaginary line Lt of the tip 35 of the stud pin 30 disposed in the first belt region B1. That is, a relationship of α2 > α1 is established.

In the present embodiment, a difference between the angle α1 and the angle α2 is not less than 10°. In the present embodiment, the difference between the angle α1 and the angle α2 is set to be not less than 20° and not greater than 30°.

Note that a configuration is possible in which the tip imaginary line Lt of the tip 35 disposed in the first belt region B1 is parallel to the reference imaginary line Lr.

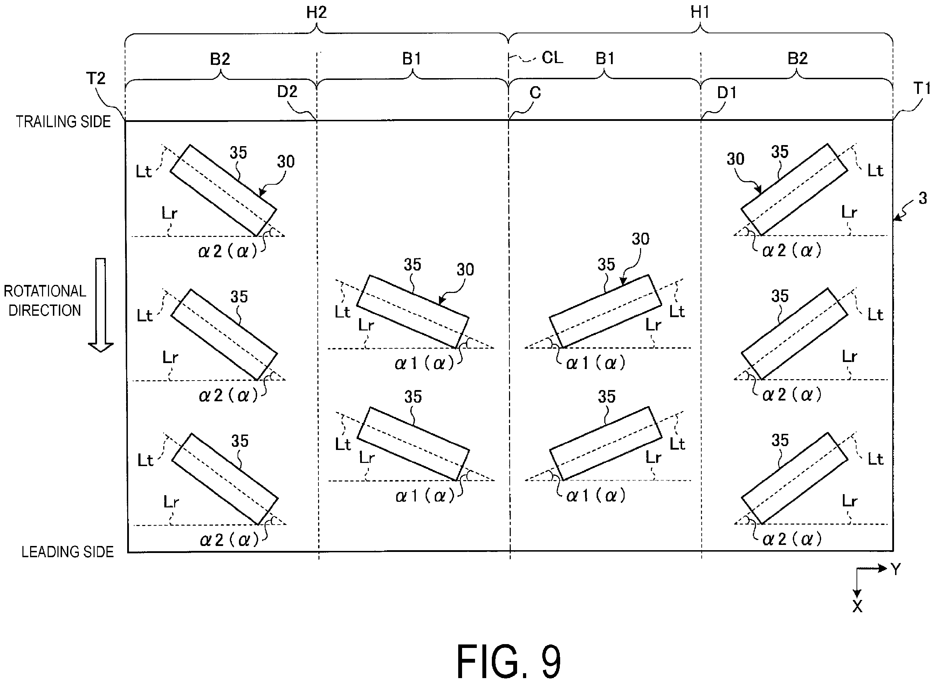

FIG. 9 is a drawing schematically illustrating an example of the tip 35 of the stud pin 30 according to the present embodiment, disposed in the tread portion 3. In FIG. 9, the tire 1 is configured to rotate in the direction indicated by the arrow. In FIG. 9, the lower portion is the leading side. The upper portion of FIG. 9 is the trailing side.

As illustrated in FIG. 9, the stud pin 30 is disposed in each of the first half region H1 and the second half region H2. The stud pin 30 is disposed in both the first belt region B1 and the second belt region B2 in the first half region H1. The stud pin 30 is disposed in both the first belt region B1 and the second belt region B2 in the second half region H2.

In the present embodiment, the number of stud pins 30 in the first half region H1 is equivalent to the number of stud pins 30 in the second half region H2.

The tip imaginary line Lt of the tip 35 of the stud pin 30 disposed in the first half region H1 is inclined to the trailing side of the tread portion 3 from the center portion C side toward the edge portion T1 side.

The tip imaginary line Lt of the tip 35 of the stud pin 30 disposed in the second half region H2 is inclined to the trailing side of the tread portion 3 from the center portion C side toward the edge portion T2 side.

In the first half region H1, the angle α2 formed by the reference imaginary line Lr and the tip imaginary line Lt of the tip 35 of the stud pin 30 disposed in the second belt region B2 is greater than the angle α1 formed by the reference imaginary line Lr and the tip imaginary line Lt of the tip 35 of the stud pin 30 disposed in the first belt region B1.

In the second half region H2, the angle α2 formed by the reference imaginary line Lr and the tip imaginary line Lt of the tip 35 of the stud pin 30 disposed in the second belt region B2 is greater than the angle α1 formed by the reference imaginary line Lr and the tip imaginary line Lt of the tip 35 of the stud pin 30 disposed in the first belt region B1.

In the present embodiment, an angle α formed by the reference imaginary line Lr and the tip imaginary line Lt of the tip 35 of the stud pin 30 disposed in the first half region H1 at a predetermined distance from the center portion C is substantially equivalent to an angle α formed by the reference imaginary line Lr and the tip imaginary line Lt of the tip 35 of the stud pin 30 disposed in the second half region H2 at a predetermined distance from the center portion C.

In the present embodiment, the angle α1 formed by the reference imaginary line Lr and the tip imaginary line Lt of the tip 35 of the stud pin 30 disposed in the first belt region B1 of the first half region H1 is substantially equivalent to the angle α1 formed by the reference imaginary line Lr and the tip imaginary line Lt of the tip 35 of the stud pin 30 disposed in the first belt region B1 of the second half region H2.

In the present embodiment, the angle α2 formed by the reference imaginary line Lr and the tip imaginary line Lt of the tip 35 of the stud pin 30 disposed in the second belt region B2 of the first half region H1 is substantially equivalent to the angle α2 formed by the reference imaginary line Lr and the tip imaginary line Lt of the tip 35 of the stud pin 30 disposed in the second belt region B2 of the second half region H2.

That is, in the present embodiment, the plurality of stud pins 30 are disposed with line symmetry with respect to the center line CL.

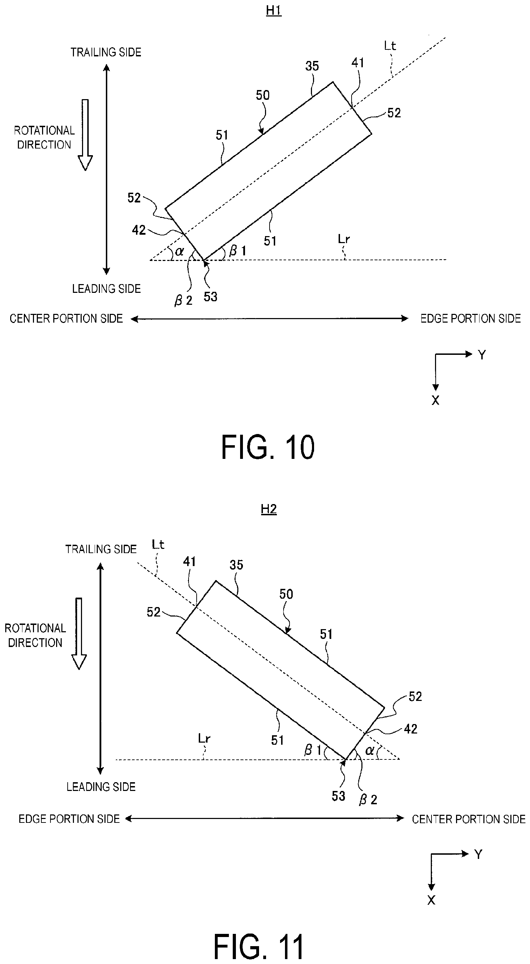

FIG. 10 is an enlarged drawing schematically illustrating an example of the tip 35 of the stud pin 30 according to the present embodiment, disposed in the first half region H1.

The edge 50 of the tip 35 includes a plurality of corner portions and a plurality of line portions connected via the corner portions. In the present embodiment, the tip 35 is rectangular. The edge 50 of the tip 35 includes four corner portions and four line portions (straight line portions). Two adjacent line portions are connected via one of the corner portions.

In the present embodiment, the edge 50 of the tip 35 includes two of a first line portion 51, and two of a second line portion 52. The two first line portions 51 are disposed parallel to each other and the two second line portions 52 are disposed parallel to each other. The first line portion 51 is a straight line. The second line portion 52 is a straight line.

The first line portion 51 is a longest line portion, and is the longest among the plurality of line portions of the tip 35. The first line portion (longest line portion) 51 is parallel to the tip imaginary line Lt.

The second line portion 52 is shorter than the first line portion 51. The second line portion 52 is connected to the first line portion 51 via the corner portion.

The edge 50 of the tip 35 includes a plurality (four) of the corner portions. In the following description, of the plurality of corner portions, the corner portion disposed farthest to the leading side is referred to as the leading corner portion 53 for convenience.

Additionally, in the following description, the first line portion 51 is referred to as a longest line portion 51 for convenience and the second line portion 52 is referred to as a short line portion 52 for convenience.

In the present embodiment, the short line portion 52 is connected to the longest line portion 51 via the leading corner portion 53.

The longest line portion 51 is inclined to the trailing side from the center portion C side toward the edge portion T1 side. The short line portion 52 is inclined to the trailing side from the edge portion T side toward the center portion C side.

In the present embodiment, an angle β1 formed by the longest line portion 51 and the reference imaginary line Lr is greater than an angle β2 formed by the short line portion 52 and the reference imaginary line Lr. Note that a configuration is possible in which the angle β1 and the angle β2 are equivalent. Additionally, a configuration is possible in which the angle β1 is less than the angle β2.

Note that a configuration is possible in which the angle β1 formed by the reference imaginary line Lr and the longest line portion 51 of the tip 35 of the stud pin 30 disposed in the second belt region B2 of the first half region H1 is greater than the angle β2 formed by the reference imaginary line Lr and the short line portion 52 of that tip 35, and the angle β1 formed by the reference imaginary line Lr and the longest line portion 51 of the tip 35 of the stud pin 30 disposed in the first belt region B1 of the first half region H1 is less than the angle β2 formed by the reference imaginary line Lr and the short line portion 52 of that tip 35.

Additionally, a configuration is possible in which the angle β1 formed by the reference imaginary line Lr and the longest line portion 51 of the tip 35 of the stud pin 30 disposed in the second belt region B2 of the first half region H1 is equivalent to the angle β2 formed by the reference imaginary line Lr and the short line portion 52 of that tip 35, and the angle β1 formed by the reference imaginary line Lr and the longest line portion 51 of the tip 35 of the stud pin 30 disposed in the first belt region B1 of the first half region H1 is less than the angle β2 formed by the reference imaginary line Lr and the short line portion 52 of that tip 35.

FIG. 11 is an enlarged drawing schematically illustrating an example of the tip 35 of the stud pin 30 according to the present embodiment, disposed in the second half region H2.

In FIG. 11, the edge 50 of the tip 35 includes the longest line portion 51 parallel to the tip imaginary line Lt, the leading corner portion 53 disposed farthest to the leading side of the plurality of corner portions, and the short line portion 52 connected to the longest line portion 51 via the leading corner portion 53. The longest line portion 51 is inclined to the trailing side from the center portion C side toward the edge portion T2 side. The short line portion 52 is inclined to the trailing side from the edge portion T2 side toward the center portion C side.

In the present embodiment, an angle β1 formed by the longest line portion 51 and the reference imaginary line Lr is greater than an angle β2 formed by the short line portion 52 and the reference imaginary line Lr. Note that a configuration is possible in which the angle β1 and the angle β2 are equivalent. Additionally, a configuration is possible in which the angle β1 is less than the angle β2.

Note that a configuration is possible in which the angle β1 formed by the reference imaginary line Lr and the longest line portion 51 of the tip 35 of the stud pin 30 disposed in the second belt region B2 of the second half region H2 is greater than the angle β2 formed by the reference imaginary line Lr and the short line portion 52 of that tip 35, and the angle β1 formed by the reference imaginary line Lr and the longest line portion 51 of the tip 35 of the stud pin 30 disposed in the first belt region B1 of the second half region H2 is less than the angle β2 formed by the reference imaginary line Lr and the short line portion 52 of that tip 35.

Additionally, a configuration is possible in which the angle β1 formed by the reference imaginary line Lr and the longest line portion 51 of the tip 35 of the stud pin 30 disposed in the second belt region B2 of the second half region H2 is equivalent to the angle β2 formed by the reference imaginary line Lr and the short line portion 52 of that tip 35, and the angle β1 formed by the reference imaginary line Lr and the longest line portion 51 of the tip 35 of the stud pin 30 disposed in the first belt region B1 of the second half region H2 is less than the angle β2 formed by the reference imaginary line Lr and the short line portion 52 of that tip 35.

As described above, according to the present embodiment, the tip imaginary line Lt of the rectangular tip 35 is disposed so as to be inclined with respect to the reference imaginary line Lr and, as such, the tire 1 can achieve both braking performance and turning performance on icy road surfaces in a compatible manner. Because the tip imaginary line Lt is inclined with respect to the reference imaginary line Lr, enhancements in edge effects of the tip 35 and increases in the contact area of the tip 35 with respect to icy road surfaces can be achieved for each of the circumferential direction and the width direction of the tire 1. As such, the stud pin 30 that includes the rectangular tip 35 inclined with respect to the reference imaginary line Lr can enhance both braking performance and turning performance on icy road surfaces of the tire 1 in a compatible manner. If the angle α is greater than 60°, the contact area of the tip 35 with respect to icy road surfaces will be smaller in the circumferential direction of the tire 1 and, consequentially, braking performance on icy road surfaces will decline. If the angle α is less than 10°, the contact area of the tip 35 with respect to icy road surfaces will be smaller in the width direction of the tire 1 and, consequentially, turning performance on icy road surfaces will decline. When the angle α is not less than 10° and not greater than 60°, both braking performance and turning performance on icy road surfaces of the tire 1 can be achieved in a compatible manner.

Note that the angle α is preferably not less than 25° and not greater than 45°. As a result, reductions in the contact area of the tip 35 with respect to icy road surfaces in the width direction of the tire 1, and reductions in the contact area of the tip 35 with respect to icy road surfaces in the width direction of the tire 1 can be suppressed. Accordingly, both braking performance and turning performance on icy road surfaces can be achieved in a compatible manner. Note that in cases where the angle α is not less than 25° and not greater than 45° and the external form of the tip 35 is rectangular, the angle β1 is configured to be less than or equal to the angle β2.

Additionally, in the present embodiment, the external form of the tip 35 has line symmetry with respect to the symmetry axis UX. As a result, manufacturing costs of the stud pin 30 are suppressed. Manufacturing costs can be suppressed to a great level when the external form of the tip 35 has line symmetry compared to when the external form of the tip 35 does not have line symmetry.

Additionally, in the present embodiment, the tip imaginary line Lt is orthogonal to the symmetry axis UX, and of the edge 50 of the tip 35, the first edge portion 41 and the second edge portion 42 of the tip 35 are portions separated farthest in the direction parallel to the tip imaginary line Lt from the symmetry axis UX. That is, an imaginary line connecting the first edge portion 41 and the second edge portion 42 of the tip 35, which are the portions separated farthest from the symmetry axis UX, is defined as the tip imaginary line Lt. As a result, positioning of the stud pin 30 in the tread portion 3 is performed smoothly.

Additionally, in the present embodiment, the tread portion 3 includes the tread pattern for which the rotational direction about the center axis AX is specified. In other words, the rotational direction of the tire 1 is set as a first direction. The tip imaginary line Lt of the stud pin 30 disposed in the half region H of the tread portion 3 between the center portion C of the tread portion 3 and the edge portion T of the tread portion 3 in the width direction is inclined to the trailing side of the tread portion 3 from the center portion C side toward the edge portion T side. As a result, both braking performance and turning performance of the tire 1 on icy road surfaces can be achieved in a compatible manner.

Additionally, in the present embodiment, the longest line portion 51, which is the longest of the plurality of line portions of the edge 50 of the tip 35, is parallel to the tip imaginary line Lt. As a result, the angle of the longest line portion 51 of the edge 50 with respect to the reference imaginary line Lr can be adjusted as a result of adjusting the angle α formed by the tip imaginary line Lt and the reference imaginary line Lr.

In the present embodiment, the edge 50 of the tip 35 includes the leading corner portion 53 disposed farthest to the leading side of the plurality of corner portions, and the longest line portion 51 and the short line portion 52 connected to each other via the leading corner portion 53. The longest line portion 51 is inclined to the trailing side from the center portion C side toward the edge portion T side. The short line portion 52 is inclined to the trailing side from the edge portion T side toward the center portion C side. As a result, enhancements in the turning performance of the tire 1 for both right turns and left turns can be achieved.

In the present embodiment, the angle β1 of at least one stud pin 30 of the plurality of stud pins 30 is greater than the angle β2. As a result, the turning performance of the tire 1 can be enhanced.

Additionally, in the present embodiment, the half region H includes, in the direction parallel to the center axis AX, the first belt region B1 between the center portion C and the middle portion D disposed outward from the center portion C in a dimension exactly 25% of the tread portion 3, and the second belt region B2 between the middle portion D and the edge portion T. In the present embodiment, the stud pin 30 is disposed in at least the second belt region B2. The second belt region B2 includes the shoulder region 9 of the tread portion 3. The stud pin 30 is disposed in the second belt region B2 that includes the shoulder region 9 and, as such, turning performance on icy road surfaces is enhanced.

Additionally, in the present embodiment, a plurality of the stud pins 30 are disposed in the second belt region B2. The tip imaginary line Lt of each of a number of stud pins 30 equal to at least 60% of the total number of stud pins 30 in the second belt region B2 is inclined with respect to the reference imaginary line Lr. As a result, of the plurality of stud pins 30 disposed in the second belt region B2, a majority of the stud pins 30 are disposed inclined. As such, both braking performance and turning performance of the tire 1 on icy road surfaces can be achieved in a compatible manner. Note that it is more preferable that the tip imaginary line Lt of each of a number of stud pins 30 equal to at least 80% of the total number of stud pins 30 in the second belt region B2 is inclined with respect to the reference imaginary line Lr.

Additionally, in the present embodiment, the stud pin 30 is disposed in both the first belt region B1 and the second belt region B2. The angle α2 formed by the reference imaginary line Lr and the tip imaginary line Lt of the stud pin 30 disposed in the second belt region B2 is greater than the angle α1 formed by the reference imaginary line Lr and the tip imaginary line Lt of the stud pin 30 disposed in the first belt region B1. The first belt region B1 includes the center region 8 of the tread portion 3. The second belt region B2 includes the shoulder region 9 of the tread portion 3. The stud pins 30 are disposed in both the first belt region B1 and the second belt region B2 and, as such, both braking performance and turning performance of the tire 1 on icy road surfaces can be achieved in a compatible manner. The angle α1 of the tip 35 of the stud pin 30 disposed in the first belt region B1 that includes the center region 8 is small and, as such, enhancements in braking performance can be achieved. The angle α2 of the tip 35 of the stud pin 30 disposed in the second belt region B2 that includes the shoulder region 9 is large and, as such, enhancements in turning performance can be achieved.

Additionally, in the present embodiment, the difference between the angle α1 of the tip 35 of the stud pin 30 disposed in the first belt region B1 and the angle α2 of the tip 35 of the stud pin 30 disposed in the second belt region B2 is set to not less than 10°. As a result, enhancements in edge effects of the tip 35 and increases in contact area of the tip 35 with respect to icy road surfaces can be achieved for each of the circumferential direction and the width direction of the tire 1. If the difference between the angle α1 and the angle α2 is less than 10°, the stud pin 30 of the first belt region B1 and the stud pin 30 of the second belt region B2 will substantially face the same direction. Consequently, edge effects are not dispersed and one of the braking performance and the turning performance may decline. Unbalancing of the edge effects is suppressed by setting the difference between the angle α1 and the angle α2 to less than 10° and configuring the orientation of the stud pin 30 of the first belt region B1 and the orientation of the stud pin 30 of the second belt region B2 to differ from each other. As such, both braking performance and turning performance of the tire 1 on icy road surfaces can be achieved in a compatible manner. Note that the difference between the angle α1 and the angle α2 is preferably not less than 20° and not greater than 30°.

Additionally, in the present embodiment, the tread portion 3 includes the first half region H1 and the second half region H2. The stud pin 30 is disposed in each of the first half region H1 and the second half region H2. The number of stud pins 30 in the first half region H1 is equivalent to the number of stud pins 30 in the second half region H2. The angle α of the tip 35 of the stud pin 30 disposed in the first half region H1 a predetermined distance from the center portion C is substantially equivalent to the angle α of the tip 35 of the stud pin 30 disposed in the second half region H2 at a predetermined distance from the center portion C. In the present embodiment, the stud pin 30 in the first half region H1 and the stud pin 30 in the second half region H2 are disposed with line symmetry with respect to the center line CL that passes through the center portion C. As such, both braking performance and turning performance of the tire 1 on icy road surfaces can be achieved in a compatible manner.

Note that, in the present embodiment, an example is described in which the angle α2 of the tip 35 of the stud pin 30 disposed in the second belt region B2 is greater than the angle α1 of the tip 35 of the stud pin 30 disposed in the first belt region B1. However, in cases where the stud pin 30 includes a first stud pin 30 and a second stud pin 30, each disposed in the direction parallel to the center axis AX, a configuration is possible in which the angle α2 of the tip 35 of the second stud pin 30 disposed farther to the edge portion T side than the first stud pin 30 is greater than the angle α1 of the tip 35 of the first stud pin 30. A configuration is possible in which both the first stud pin 30 and the second stud pin 30 are disposed in the first belt region B1. A configuration is possible in which both the first stud pin 30 and the second stud pin 30 are disposed in the second belt region B2. The angle α2 of the tip 35 of the second stud pin 30 is greater than the angle α1 of the tip 35 of the first stud pin 30 and, as such, both braking performance and turning performance of the tire 1 on icy road surfaces can be achieved in a compatible manner. The braking performance of the tire 1 is enhanced by disposing the first stud pin 30 with the small angle α1 at a location near the center portion C of the tread portion 3. The turning performance of the tire 1 is enhanced by disposing the second stud pin 30 with the large angle α2 at a location near the edge portion T of the tread portion 3.

### Second Embodiment

A second embodiment will now be described. In the description below, identical or substantially similar constituent portions to those of the above-described embodiments are assigned with the same reference numbers, and descriptions of those constituent portions are either simplified or omitted.

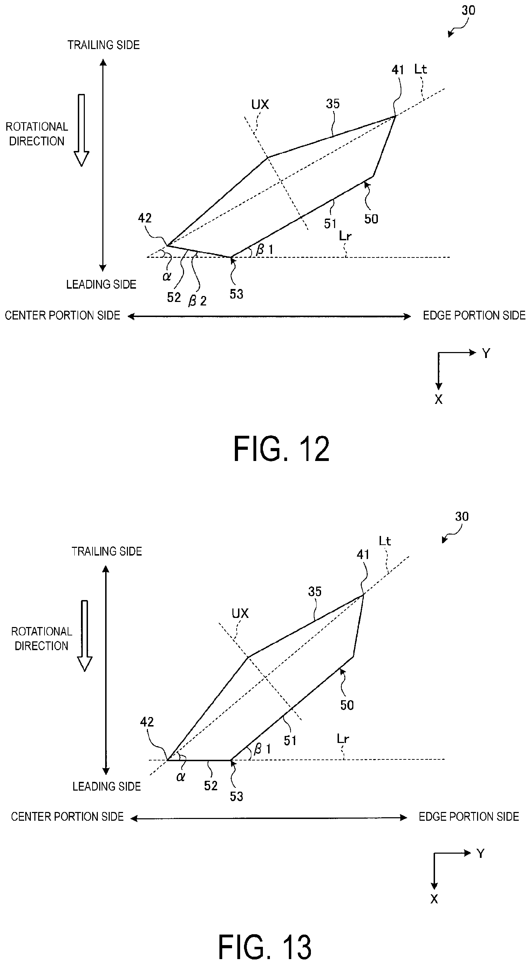

FIG. 12 is a drawing schematically illustrating an example of the tip 35 according to the present embodiment. As illustrated in FIG. 12, a configuration is possible in which the external form of the tip 35 is pentagonal.

As illustrated in FIG. 12, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the trailing side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (five) corner portions and a plurality of (five) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the trailing side of the tread portion 3 from the center portion C side toward the edge portion T side. The short line portion 52 is inclined to the trailing side of the tread portion 3 from the edge portion T side toward the center portion C side.

In the example illustrated in FIG. 12, the angle β1 formed by the longest line portion 51 and the reference imaginary line Lr is greater than the angle β2 formed by the short line portion 52 and the reference imaginary line Lr. Note that a configuration is possible in which the angle β1 and the angle β2 are equivalent. Additionally, a configuration is possible in which the angle β1 is less than the angle β2.

FIG. 13 is a drawing schematically illustrating an example of the tip 35 according to the present embodiment. As illustrated in FIG. 13, a configuration is possible in which the longest line portion 51 is inclined to the trailing side of the tread portion 3 from the center portion C side toward the edge portion T side, and the short line portion 52 is parallel to the reference imaginary line Lr.

In the present embodiment as well, both braking performance and turning performance of the tire 1 on icy road surfaces can be achieved in a compatible manner.

### Third Embodiment

A third embodiment will now be described. In the description below, identical or substantially similar constituent portions to those of the above-described embodiments are assigned with the same reference numbers, and descriptions of those constituent portions are either simplified or omitted.

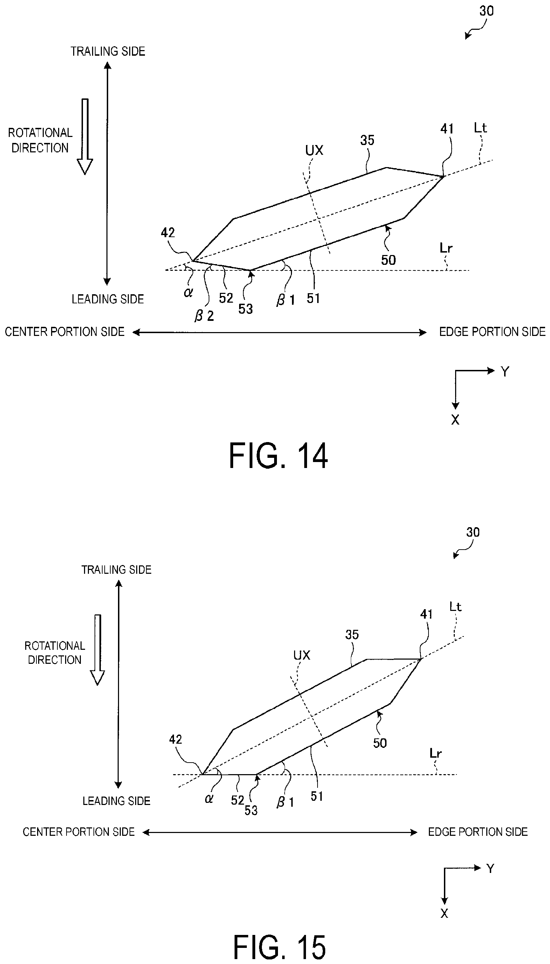

FIG. 14 is a drawing schematically illustrating an example of the tip 35 according to the present embodiment. As illustrated in FIG. 14, a configuration is possible in which the external form of the tip 35 is hexagonal.

As illustrated in FIG. 14, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the trailing side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (six) corner portions and a plurality of (six) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the trailing side of the tread portion 3 from the center portion C side toward the edge portion T side. The short line portion 52 is inclined to the trailing side of the tread portion 3 from the edge portion T side toward the center portion C side.

In the example illustrated in FIG. 14, the angle β1 formed by the longest line portion 51 and the reference imaginary line Lr is greater than the angle β2 formed by the short line portion 52 and the reference imaginary line Lr. Note that a configuration is possible in which the angle β1 and the angle β2 are equivalent. Additionally, a configuration is possible in which the angle β1 is less than the angle β2.

FIG. 15 is a drawing schematically illustrating an example of the tip 35 according to the present embodiment. As illustrated in FIG. 15, a configuration is possible in which the longest line portion 51 is inclined to the trailing side of the tread portion 3 from the center portion C side toward the edge portion T side, and the short line portion 52 is parallel to the reference imaginary line Lr.

In the present embodiment as well, both braking performance and turning performance of the tire 1 on icy road surfaces can be achieved in a compatible manner.

### Fourth Embodiment

A fourth embodiment will now be described. In the description below, identical or substantially similar constituent portions to those of the above-described embodiments are assigned with the same reference numbers, and descriptions of those constituent portions are either simplified or omitted.

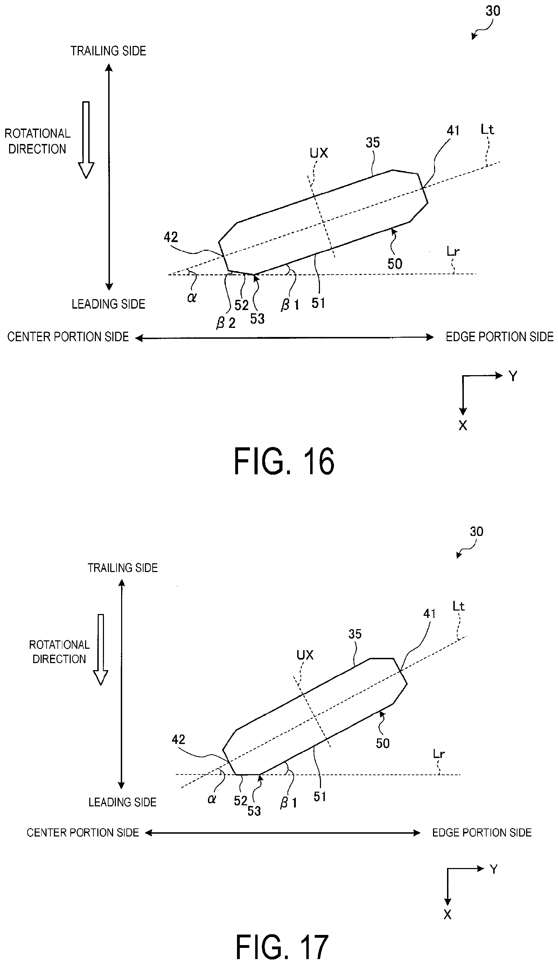

FIG. 16 is a drawing schematically illustrating an example of the tip 35 according to the present embodiment. As illustrated in FIG. 16, a configuration is possible in which the external form of the tip 35 is octagonal.

As illustrated in FIG. 16, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the trailing side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (eight) corner portions and a plurality of (eight) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the trailing side of the tread portion 3 from the center portion C side toward the edge portion T side. The short line portion 52 is inclined to the trailing side of the tread portion 3 from the edge portion T side toward the center portion C side.

In the example illustrated in FIG. 16, the angle β1 formed by the longest line portion 51 and the reference imaginary line Lr is greater than the angle β2 formed by the short line portion 52 and the reference imaginary line Lr. Note that a configuration is possible in which the angle β1 and the angle β2 are equivalent. Additionally, a configuration is possible in which the angle β1 is less than the angle β2.

FIG. 17 is a drawing schematically illustrating an example of the tip 35 according to the present embodiment. As illustrated in FIG. 17, a configuration is possible in which the longest line portion 51 is inclined to the trailing side of the tread portion 3 from the center portion C side toward the edge portion T side, and the short line portion 52 is parallel to the reference imaginary line Lr.

In the present embodiment as well, both braking performance and turning performance of the tire 1 on icy road surfaces can be achieved in a compatible manner.

### Fifth Embodiment

A fifth embodiment will now be described. In the description below, identical or substantially similar constituent portions to those of the above-described embodiments are assigned with the same reference numbers, and descriptions of those constituent portions are either simplified or omitted.

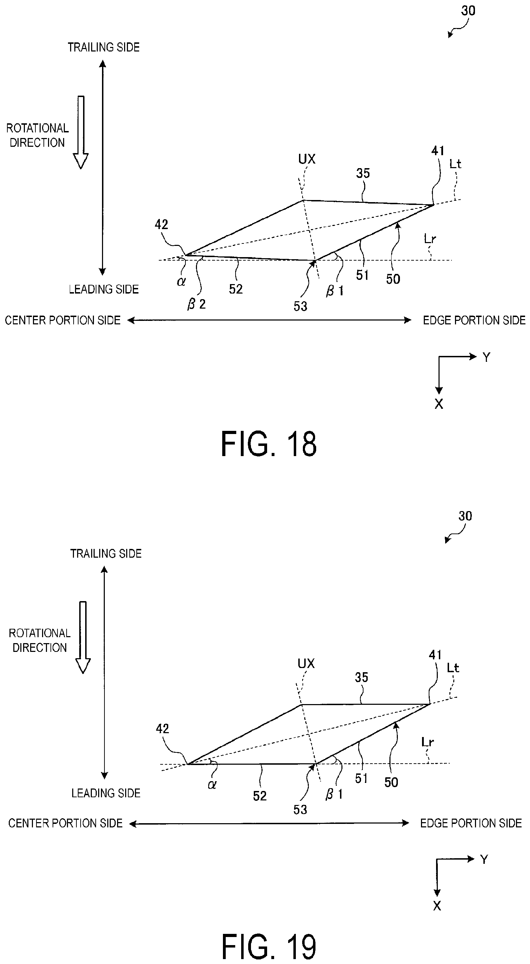

FIG. 18 is a drawing schematically illustrating an example of the tip 35 according to the present embodiment. As illustrated in FIG. 18, a configuration is possible in which the external form of the tip 35 is quadrangular (rhombic).

As illustrated in FIG. 18, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the trailing side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (four) corner portions and a plurality of (four) line portions connected via the corner portions.

In the present embodiment, lengths of the plurality of (four) line portions are equivalent. All the four line portions can be considered as the longest line portion 51. All the four line portions can also be considered as the short line portion 52.

The edge 50 of the tip 35 includes the leading corner portion 53 disposed farthest to the leading side of the plurality of corner portions, and the line portion (short line portion) 52 connected to the line portion (longest line portion) 51 via the leading corner portion 53. The line portion 51 is inclined to the trailing side of the tread portion 3 from the center portion C side toward the edge portion T side. The line portion 52 is inclined to the trailing side of the tread portion 3 from the edge portion T side toward the center portion C side.

In the example illustrated in FIG. 18, the angle β1 formed by the line portion 51 and the reference imaginary line Lr is greater than the angle β2 formed by the line portion 52 and the reference imaginary line Lr. Note that a configuration is possible in which the angle β1 and the angle β2 are equivalent. Additionally, a configuration is possible in which the angle β1 is less than the angle β2.

FIG. 19 is a drawing schematically illustrating an example of the tip 35 according to the present embodiment. As illustrated in FIG. 19, a configuration is possible in which the line portion 51 is inclined to the trailing side of the tread portion 3 from the center portion C side toward the edge portion T side, and the line portion 52 is parallel to the reference imaginary line Lr.

In the present embodiment as well, both braking performance and turning performance of the tire 1 on icy road surfaces can be achieved in a compatible manner.

### Sixth Embodiment

A sixth embodiment will now be described. In the description below, identical or substantially similar constituent portions to those of the above-described embodiments are assigned with the same reference numbers, and descriptions of those constituent portions are either simplified or omitted.

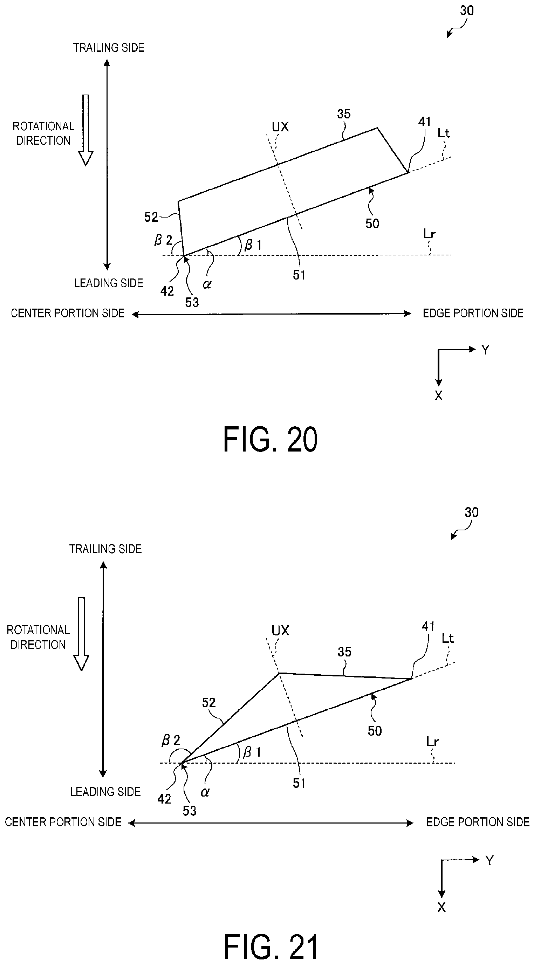

FIG. 20 is a drawing schematically illustrating an example of the tip 35 according to the present embodiment. As illustrated in FIG. 20, a configuration is possible in which the external form of the tip 35 is quadrangular (trapezoidal).

As illustrated in FIG. 20, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the trailing side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (four) corner portions and a plurality of (four) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the trailing side of the tread portion 3 from the center portion C side toward the edge portion T side. The short line portion 52 is inclined to the trailing side of the tread portion 3 from the edge portion T side toward the center portion C side. Note that a configuration is possible in which the short line portion 52 is inclined to the trailing side of the tread portion 3 from the center portion C side toward the edge portion T side.

In the example illustrated in FIG. 20, the angle β1 formed by the longest line portion 51 and the reference imaginary line Lr is less than the angle β2 formed by the short line portion 52 and the reference imaginary line Lr. Note that a configuration is possible in which the angle β1 and the angle β2 are equivalent. Additionally, a configuration is possible in which the angle β1 is greater than the angle β2.

In the present embodiment as well, both braking performance and turning performance of the tire 1 on icy road surfaces can be achieved in a compatible manner.

### Seventh Embodiment

A seventh embodiment will now be described. In the description below, identical or substantially similar constituent portions to those of the above-described embodiments are assigned with the same reference numbers, and descriptions of those constituent portions are either simplified or omitted.

FIG. 21 is a drawing schematically illustrating an example of the tip 35 according to the present embodiment. As illustrated in FIG. 21, a configuration is possible in which the external form of the tip 35 is triangular.

As illustrated in FIG. 21, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the trailing side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (three) corner portions and a plurality of (three) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the trailing side of the tread portion 3 from the center portion C side toward the edge portion T side. The short line portion 52 is inclined to the trailing side of the tread portion 3 from the center portion C side toward the edge portion T side.

In the example illustrated in FIG. 21, the angle β1 formed by the longest line portion 51 and the reference imaginary line Lr is less than the angle β2 formed by the short line portion 52 and the reference imaginary line Lr. Note that a configuration is possible in which the angle β1 and the angle β2 are equivalent. Additionally, a configuration is possible in which the angle β1 is greater than the angle β2.

In the present embodiment as well, both braking performance and turning performance of the tire 1 on icy road surfaces can be achieved in a compatible manner.

### Eighth Embodiment

An eighth embodiment will now be described. In the description below, identical or substantially similar constituent portions to those of the above-described embodiments are assigned with the same reference numbers, and descriptions of those constituent portions are either simplified or omitted.

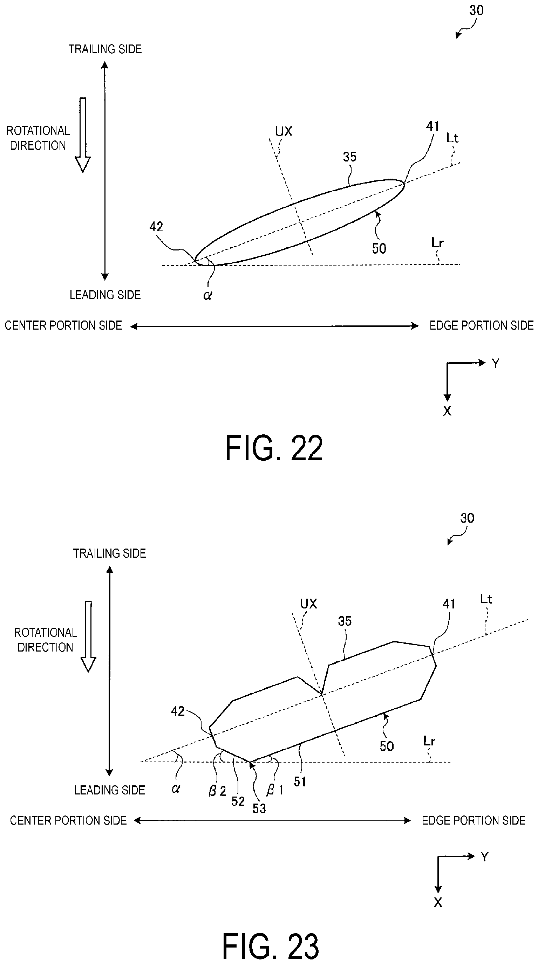

FIG. 22 is a drawing schematically illustrating an example of the tip 35 according to the present embodiment. As illustrated in FIG. 22, a configuration is possible in which the external form of the tip 35 is oblong.

As illustrated in FIG. 22, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the trailing side of the tread portion 3 from the center portion C side toward the edge portion T side. The angle α formed by the tip imaginary line Lt and the reference imaginary line Lr is not less than 10° and not greater than 60°.

In the present embodiment as well, both braking performance and turning performance of the tire 1 on icy road surfaces can be achieved in a compatible manner.

### Ninth Embodiment

A ninth embodiment will now be described. In the description below, identical or substantially similar constituent portions to those of the above-described embodiments are assigned with the same reference numbers, and descriptions of those constituent portions are either simplified or omitted.

FIG. 23 is a drawing schematically illustrating an example of the tip 35 according to the present embodiment. As illustrated in FIG. 23, a configuration is possible in which the external form of the tip 35 includes a recess. The external form of the tip 35 illustrated in FIG. 23 includes eleven corner portions.

As illustrated in FIG. 23, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the trailing side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (eleven) corner portions and a plurality of (eleven) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the trailing side of the tread portion 3 from the center portion C side toward the edge portion T side. The short line portion 52 is inclined to the trailing side of the tread portion 3 from the edge portion T side toward the center portion C side.

In the example illustrated in FIG. 23, the angle β1 formed by the longest line portion 51 and the reference imaginary line Lr is less than the angle β2 formed by the short line portion 52 and the reference imaginary line Lr. Note that a configuration is possible in which the angle β1 and the angle β2 are equivalent. Additionally, a configuration is possible in which the angle β1 is greater than the angle β2.

In the present embodiment as well, both braking performance and turning performance of the tire 1 on icy road surfaces can be achieved in a compatible manner.

### Tenth Embodiment

A tenth embodiment will now be described. In the description below, identical or substantially similar constituent portions to those of the above-described embodiments are assigned with the same reference numbers, and descriptions of those constituent portions are either simplified or omitted.

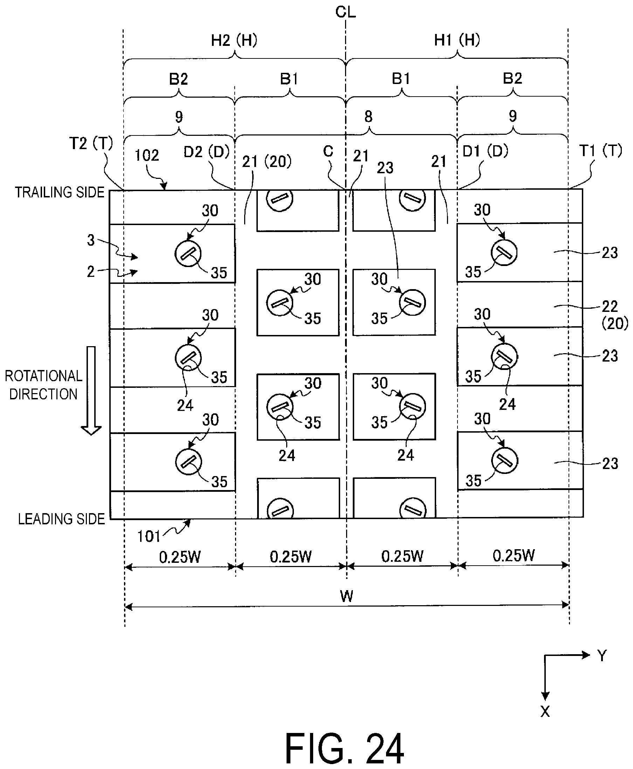

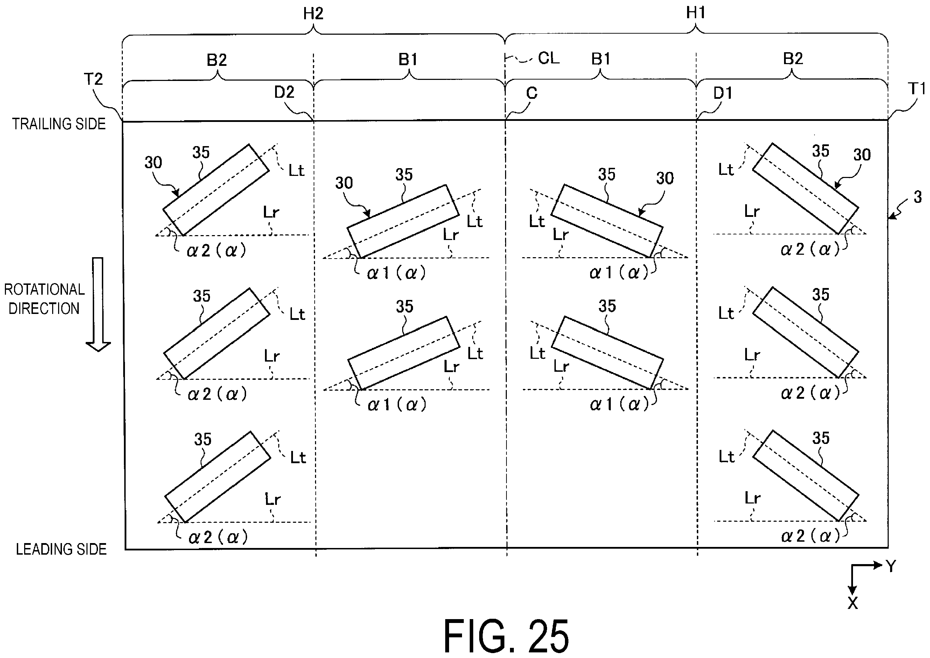

FIG. 24 is a plan view illustrating a portion of the tread portion 3 of the tire 1 according to the present embodiment. FIG. 25 is a plan view schematically illustrating the tread portion 3 and the tip 35 of the stud pin 30 according to the present embodiment.

As with the embodiments described above, the tread portion 3 includes the half region H including the first half region H1 and the second half region H2. The half region H includes the first belt region B1 and the second belt region B2. The stud pin 30 is disposed in at least the second belt region B2.

A plurality of the stud pin 30 are disposed in the second belt region B2. In the present embodiment as well, the tip imaginary line Lt of each of a number of stud pins 30 equal to at least 60% of the total number of stud pins 30 in the second belt region B2 is inclined with respect to the reference imaginary line Lr.

In the present embodiment, the stud pin 30 is disposed in each of the first belt region B1 and the second belt region B2.

The tread portion 3 includes a tread pattern for which the rotational direction about the center axis AX is specified. In the present embodiment, the tip imaginary line Lt of the stud pin 30 disposed in the half region H is inclined to the leading side of the tread portion 3 from the center portion C side toward the edge portion T side.

The angle α2 formed by the reference imaginary line Lr and the tip imaginary line Lt of the tip 35 of the stud pin 30 disposed in the second belt region B2 is greater than the angle α1 formed by the reference imaginary line Lr and the tip imaginary line Lt of the tip 35 of the stud pin 30 disposed in the first belt region B1.

In the present embodiment as well, the difference between the angle α1 and the angle α2 is not less than 10°.

The stud pin 30 is disposed in each of the first half region H1 and the second half region H2. The number of stud pins 30 in the first half region H1 is equivalent to the number of stud pins 30 in the second half region H2. The angle α of the tip 35 of the stud pin 30 disposed in the first half region H1 at a predetermined distance from the center portion C is substantially equivalent to the angle α of the tip 35 of the stud pin 30 disposed in the second half region H2 a predetermined distance from the center portion C.

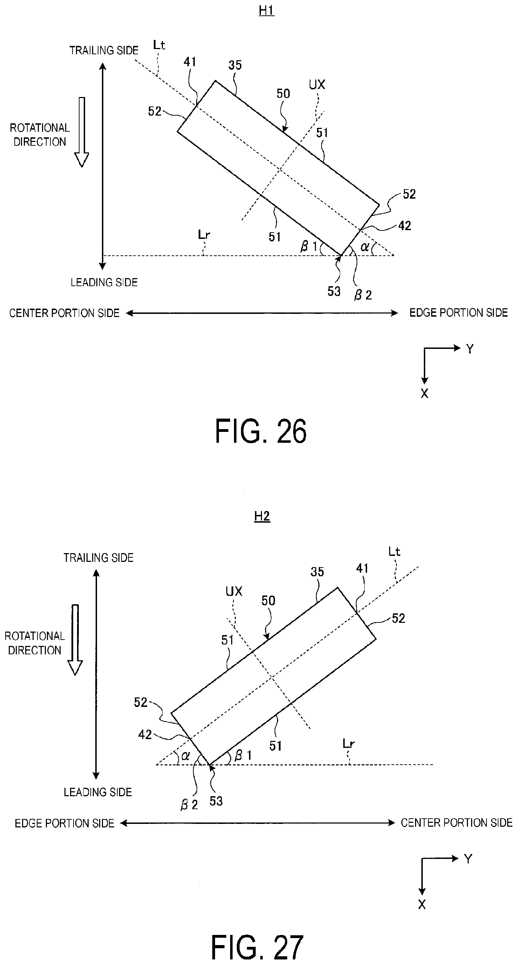

FIG. 26 is an enlarged drawing schematically illustrating an example of the tip 35 of the stud pin 30 according to the present embodiment, disposed in the first half region H1.

The edge 50 of the tip 35 includes a plurality of corner portions and a plurality of line portions connected via the corner portions. In the present embodiment, the tip 35 is rectangular.

As illustrated in FIG. 26, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the leading side of the tread portion 3 from the center portion C side toward the edge portion T1 side. The angle α formed by the tip imaginary line Lt and the reference imaginary line Lr is not less than 10° and not greater than 60°.

The edge 50 of the tip 35 includes a plurality of (four) corner portions and a plurality of (four) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the leading side of the tread portion 3 from the center portion C side toward the edge portion T1 side. The short line portion 52 is inclined to the leading side of the tread portion 3 from the edge portion T1 side toward the center portion C side.

In the example illustrated in FIG. 26, the angle β1 formed by the longest line portion 51 and the reference imaginary line Lr is greater than the angle β2 formed by the short line portion 52 and the reference imaginary line Lr. Note that a configuration is possible in which the angle β1 and the angle β2 are equivalent. Additionally, a configuration is possible in which the angle β1 is less than the angle β2.

FIG. 27 is an enlarged drawing schematically illustrating an example of the tip 35 of the stud pin 30 according to the present embodiment, disposed in the second half region H2.

As illustrated in FIG. 27, the tip imaginary line Lt is inclined to the leading side of the tread portion 3 from the center portion C side toward the edge portion T2 side. The angle α formed by the tip imaginary line Lt and the reference imaginary line Lr is not less than 10° and not greater than 60°.

The edge 50 of the tip 35 includes a plurality of (four) corner portions and a plurality of (four) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the leading side of the tread portion 3 from the center portion C side toward the edge portion T2 side. The short line portion 52 is inclined to the leading side of the tread portion 3 from the edge portion T2 side toward the center portion C side.

In the example illustrated in FIG. 27, the angle β1 formed by the longest line portion 51 and the reference imaginary line Lr is greater than the angle β2 formed by the short line portion 52 and the reference imaginary line Lr. Note that a configuration is possible in which the angle β1 and the angle β2 are equivalent. Additionally, a configuration is possible in which the angle β1 is less than the angle β2.

As described above, in the present embodiment as well, both braking performance and turning performance of the tire 1 on icy road surfaces can be achieved in a compatible manner.

### Eleventh Embodiment

An eleventh embodiment will now be described. In the description below, identical or substantially similar constituent portions to those of the above-described embodiments are assigned with the same reference numbers, and descriptions of those constituent portions are either simplified or omitted.

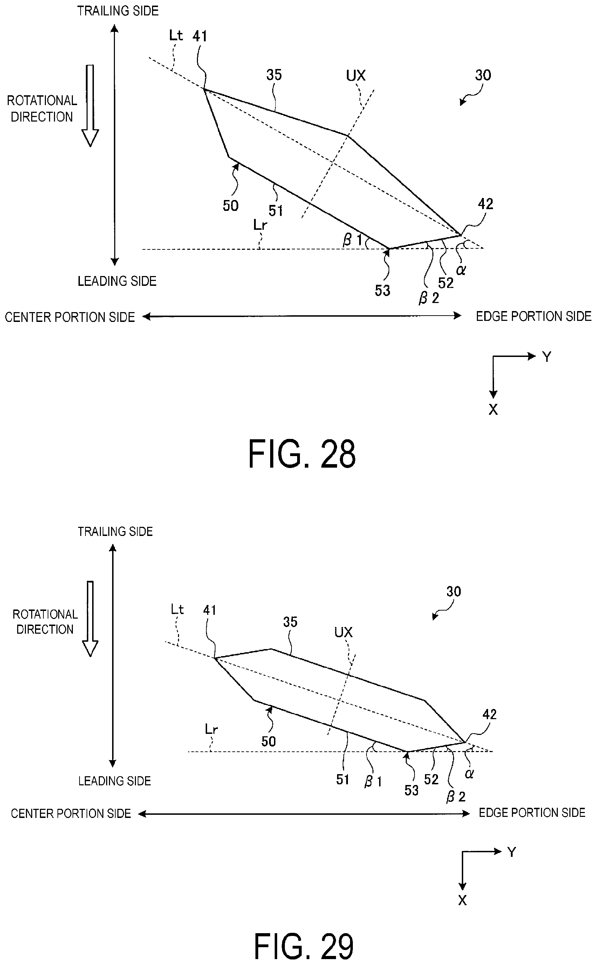

FIG. 28 is a drawing schematically illustrating an example of the tip 35 according to the present embodiment. As illustrated in FIG. 28, a configuration is possible in which the external form of the tip 35 is pentagonal.

As illustrated in FIG. 28, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the leading side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (five) corner portions and a plurality of (five) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the leading side of the tread portion 3 from the center portion C side toward the edge portion T side. The short line portion 52 is inclined to the leading side of the tread portion 3 from the edge portion T side toward the center portion C side.

In the example illustrated in FIG. 28, the angle β1 formed by the longest line portion 51 and the reference imaginary line Lr is greater than the angle β2 formed by the short line portion 52 and the reference imaginary line Lr. Note that a configuration is possible in which the angle β1 and the angle β2 are equivalent. Additionally, a configuration is possible in which the angle β1 is less than the angle β2.

Note that a configuration is possible in which the longest line portion 51 is inclined to the leading side of the tread portion 3 from the center portion C side toward the edge portion T side, and the short line portion 52 is parallel to the reference imaginary line Lr.

In the present embodiment as well, both braking performance and turning performance of the tire 1 on icy road surfaces can be achieved in a compatible manner.

### Twelfth Embodiment

A twelfth embodiment will now be described. In the description below, identical or substantially similar constituent portions to those of the above-described embodiments are assigned with the same reference numbers, and descriptions of those constituent portions are either simplified or omitted.

FIG. 29 is a drawing schematically illustrating an example of the tip 35 according to the present embodiment. As illustrated in FIG. 29, a configuration is possible in which the external form of the tip 35 is hexagonal.

As illustrated in FIG. 29, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the leading side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (six) corner portions and a plurality of (six) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the leading side of the tread portion 3 from the center portion C side toward the edge portion T side. The short line portion 52 is inclined to the leading side of the tread portion 3 from the edge portion T side toward the center portion C side.

In the example illustrated in FIG. 29, the angle β1 formed by the longest line portion 51 and the reference imaginary line Lr is greater than the angle β2 formed by the short line portion 52 and the reference imaginary line Lr. Note that a configuration is possible in which the angle β1 and the angle β2 are equivalent. Additionally, a configuration is possible in which the angle β1 is less than the angle β2.

Note that a configuration is possible in which the longest line portion 51 is inclined to the leading side of the tread portion 3 from the center portion C side toward the edge portion T side, and the short line portion 52 is parallel to the reference imaginary line Lr.

In the present embodiment as well, both braking performance and turning performance of the tire 1 on icy road surfaces can be achieved in a compatible manner.

### Thirteenth Embodiment

A thirteenth embodiment will now be described. In the description below, identical or substantially similar constituent portions to those of the above-described embodiments are assigned with the same reference numbers, and descriptions of those constituent portions are either simplified or omitted.

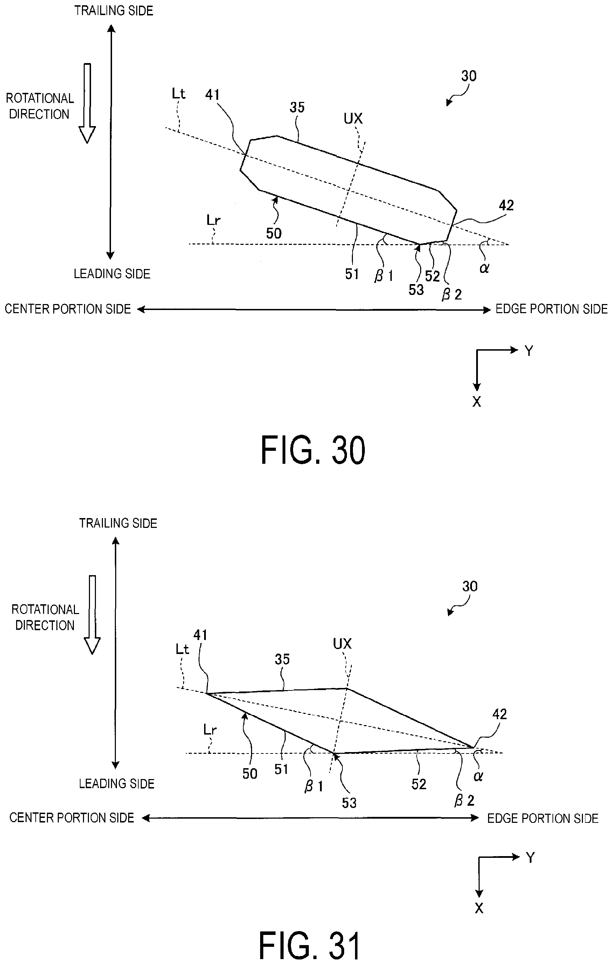

FIG. 30 is a drawing schematically illustrating an example of the tip 35 according to the present embodiment. As illustrated in FIG. 30, a configuration is possible in which the external form of the tip 35 is octagonal.

As illustrated in FIG. 30, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the leading side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (eight) corner portions and a plurality of (eight) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the leading side of the tread portion 3 from the center portion C side toward the edge portion T side. The short line portion 52 is inclined to the leading side of the tread portion 3 from the edge portion T side toward the center portion C side.

In the example illustrated in FIG. 30, the angle β1 formed by the longest line portion 51 and the reference imaginary line Lr is greater than the angle β2 formed by the short line portion 52 and the reference imaginary line Lr. Note that a configuration is possible in which the angle β1 and the angle β2 are equivalent. Additionally, a configuration is possible in which the angle β1 is less than the angle β2.

Note that a configuration is possible in which the longest line portion 51 is inclined to the leading side of the tread portion 3 from the center portion C side toward the edge portion T side, and the short line portion 52 is parallel to the reference imaginary line Lr.

In the present embodiment as well, both braking performance and turning performance of the tire 1 on icy road surfaces can be achieved in a compatible manner.

### Fourteenth Embodiment

A fourteenth embodiment will now be described. In the description below, identical or substantially similar constituent portions to those of the above-described embodiments are assigned with the same reference numbers, and descriptions of those constituent portions are either simplified or omitted.

FIG. 31 is a drawing schematically illustrating an example of the tip 35 according to the present embodiment. As illustrated in FIG. 31, a configuration is possible in which the external form of the tip 35 is quadrangular (rhombic).

As illustrated in FIG. 31, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the leading side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (four) corner portions and a plurality of (four) line portions connected via the corner portions.

In the present embodiment, lengths of the plurality of (four) line portions are equivalent. All the four line portions can be considered as the longest line portion 51. All the four line portions can also be considered as the short line portion 52.

The edge 50 of the tip 35 includes the leading corner portion 53 disposed farthest to the leading side of the plurality of corner portions, and the line portion (short line portion) 52 connected to the line portion (longest line portion) 51 via the leading corner portion 53. The line portion 51 is inclined to the leading side of the tread portion 3 from the center portion C side toward the edge portion T side. The line portion 52 is inclined to the leading side of the tread portion 3 from the edge portion T side toward the center portion C side.

In the example illustrated in FIG. 31, the angle β1 formed by the line portion 51 and the reference imaginary line Lr is greater than the angle β2 formed by the line portion 52 and the reference imaginary line Lr. Note that a configuration is possible in which the angle β1 and the angle β2 are equivalent. Additionally, a configuration is possible in which the angle β1 is less than the angle β2.

Note that a configuration is possible in which the line portion 51 is inclined to the leading side of the tread portion 3 from the center portion C side toward the edge portion T side, and the line portion 52 is parallel to the reference imaginary line Lr.

In the present embodiment as well, both braking performance and turning performance of the tire 1 on icy road surfaces can be achieved in a compatible manner.

### Fifteenth Embodiment

A fifteenth embodiment will now be described. In the description below, identical or substantially similar constituent portions to those of the above-described embodiments are assigned with the same reference numbers, and descriptions of those constituent portions are either simplified or omitted.

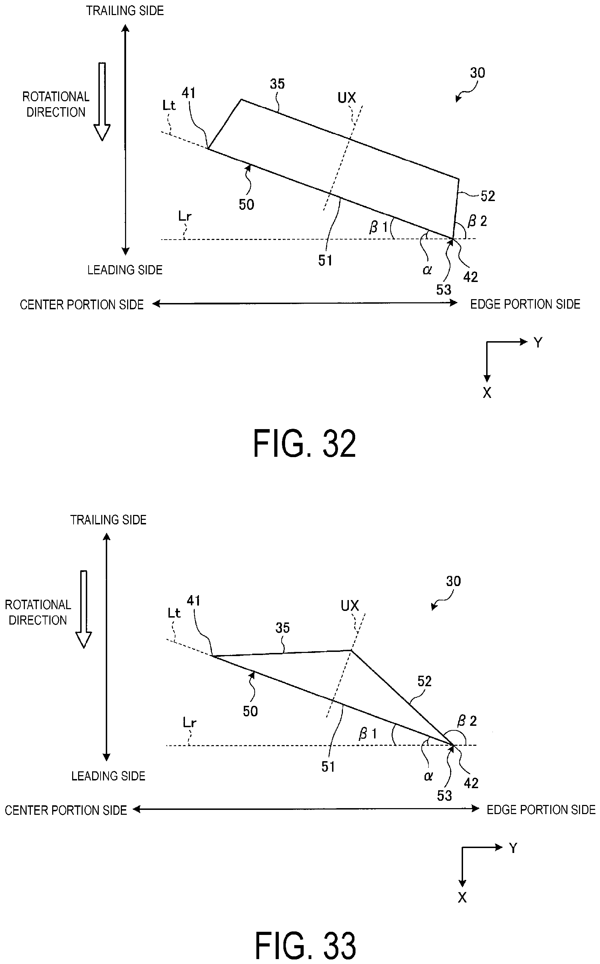

FIG. 32 is a drawing schematically illustrating an example of the tip 35 according to the present embodiment. As illustrated in FIG. 32, a configuration is possible in which the external form of the tip 35 is quadrangular (trapezoidal).

As illustrated in FIG. 32, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the leading side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (four) corner portions and a plurality of (four) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the leading side of the tread portion 3 from the center portion C side toward the edge portion T side. The short line portion 52 is inclined to the leading side of the tread portion 3 from the edge portion T side toward the center portion C side. Note that a configuration is possible in which the short line portion 52 is inclined to the leading side of the tread portion 3 from the center portion C side toward the edge portion T side.

In the example illustrated in FIG. 32, the angle β1 formed by the longest line portion 51 and the reference imaginary line Lr is less than the angle β2 formed by the short line portion 52 and the reference imaginary line Lr. Note that a configuration is possible in which the angle β1 and the angle β2 are equivalent. Additionally, a configuration is possible in which the angle β1 is greater than the angle β2.

In the present embodiment as well, both braking performance and turning performance of the tire 1 on icy road surfaces can be achieved in a compatible manner.

### Sixteenth Embodiment

A sixteenth embodiment will now be described. In the description below, identical or substantially similar constituent portions to those of the above-described embodiments are assigned with the same reference numbers, and descriptions of those constituent portions are either simplified or omitted.

FIG. 33 is a drawing schematically illustrating an example of the tip 35 according to the present embodiment. As illustrated in FIG. 33, a configuration is possible in which the external form of the tip 35 is triangular.

As illustrated in FIG. 33, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the leading side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (three) corner portions and a plurality of (three) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the leading side of the tread portion 3 from the center portion C side toward the edge portion T side. The short line portion 52 is inclined to the leading side of the tread portion 3 from the center portion C side toward the edge portion T side.

In the example illustrated in FIG. 33, the angle β1 formed by the longest line portion 51 and the reference imaginary line Lr is less than the angle β2 formed by the short line portion 52 and the reference imaginary line Lr. Note that a configuration is possible in which the angle β1 and the angle β2 are equivalent. Additionally, a configuration is possible in which the angle β1 is greater than the angle β2.

In the present embodiment as well, both braking performance and turning performance of the tire 1 on icy road surfaces can be achieved in a compatible manner.

### Seventeenth Embodiment

A seventeenth embodiment will now be described. In the description below, identical or substantially similar constituent portions to those of the above-described embodiments are assigned with the same reference numbers, and descriptions of those constituent portions are either simplified or omitted.

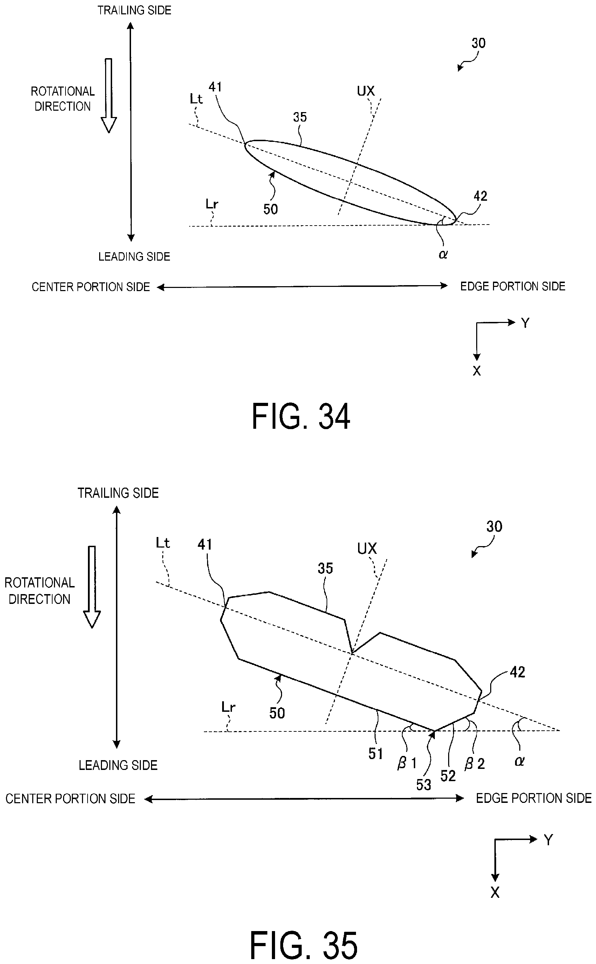

FIG. 34 is a drawing schematically illustrating an example of the tip 35 according to the present embodiment. As illustrated in FIG. 34, a configuration is possible in which the external form of the tip 35 is oblong.

As illustrated in FIG. 34, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the leading side of the tread portion 3 from the center portion C side toward the edge portion T side. The angle α formed by the tip imaginary line Lt and the reference imaginary line Lr is not less than 10° and not greater than 60°.

In the present embodiment as well, both braking performance and turning performance of the tire 1 on icy road surfaces can be achieved in a compatible manner.

### Eighteenth Embodiment

An eighteenth embodiment will now be described. In the description below, identical or substantially similar constituent portions to those of the above-described embodiments are assigned with the same reference numbers, and descriptions of those constituent portions are either simplified or omitted.

FIG. 35 is a drawing schematically illustrating an example of the tip 35 according to the present embodiment. As illustrated in FIG. 35, a configuration is possible in which the external form of the tip 35 includes a recess. The external form of the tip 35 illustrated in FIG. 35 includes eleven corner portions.

As illustrated in FIG. 35, the external form of the tip 35 has line symmetry with respect to the symmetry axis UX. The tip imaginary line Lt is orthogonal to the symmetry axis UX. The tip imaginary line Lt connects the first edge portion 41 and the second edge portion 42 of the tip 35 in the longitudinal direction of the tip 35. Of the edge 50 of the tip 35, the edge portion 41 and the edge portion 42 are portions separated farthest in a direction parallel to the tip imaginary line Lt from the symmetry axis UX. The stud pin 30 is disposed such that the tip imaginary line Lt is inclined with respect to the reference imaginary line Lr parallel to the center axis AX. The tip imaginary line Lt is inclined to the leading side of the tread portion 3 from the center portion C side toward the edge portion T side. The angle α formed by the tip imaginary line Lt and the reference imaginary line Lr is not less than 10° and not greater than 60°.

The edge 50 of the tip 35 includes a plurality of (eleven) corner portions and a plurality of (eleven) line portions connected via the corner portions. The longest line portion 51 of the plurality of line portions is parallel to the tip imaginary line Lt.

The edge 50 of the tip 35 includes the leading corner portion 53 disposed farthest to the leading side of the plurality of corner portions, and the short line portion 52 connected to the longest line portion 51 via the leading corner portion 53. The longest line portion 51 is inclined to the leading side of the tread portion 3 from the center portion C side toward the edge portion T side. The short line portion 52 is inclined to the leading side of the tread portion 3 from the edge portion T side toward the center portion C side.

In the example illustrated in FIG. 35, the angle β1 formed by the longest line portion 51 and the reference imaginary line Lr is less than the angle β2 formed by the short line portion 52 and the reference imaginary line Lr. Note that a configuration is possible in which the angle β1 and the angle β2 are equivalent. Additionally, a configuration is possible in which the angle β1 is greater than the angle β2.

In the present embodiment as well, both braking performance and turning performance of the tire 1 on icy road surfaces can be achieved in a compatible manner.

### Examples

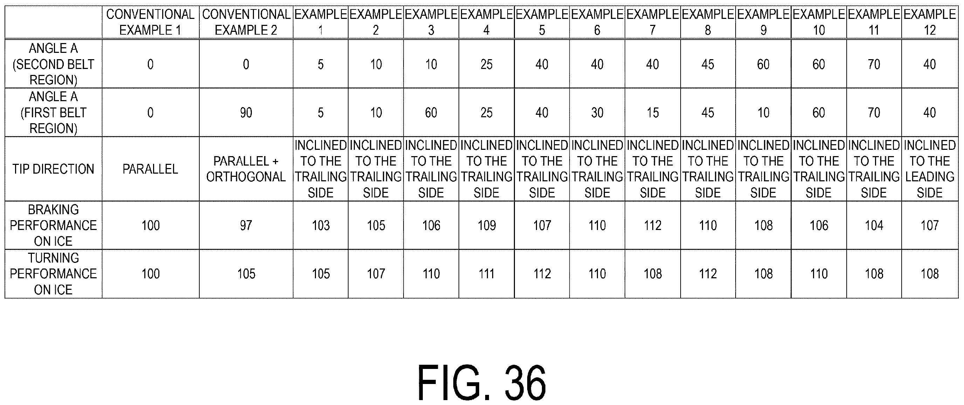

FIG. 36 is a table showing results of performance testing of tires 1 according to the present example. FIG. 36 shows the results of performance testing of braking performance (braking performance on ice) and turning performance (turning performance on ice) of the tire 1 on icy road surfaces.

In the performance testing, the tire 1 provided with the stud pin 30 is mounted on an applicable rim stipulated by JATMA. The size of the tire 1 is 205/55R16. The tire 1 is filled to the maximum air pressure and loaded to the maximum load capacity stipulated by JATMA.

In the performance testing, the tire 1 is mounted on a front wheel drive test vehicle with an engine displacement of 2000 cc. This vehicle is driven on an icy road surface.

Performance testing of braking performance on ice: Distance required to reduce speed from 40 km/hr to 5 km/hr is measured. Indexed evaluation based on the measurement results is performed, with the result of the Comparative Example (Conventional Example 1) being defined as the reference (100). For this evaluation, higher numerical values indicate higher performance.

Performance testing of turning performance on ice: Lap times achieved by drivers are measured. Indexed evaluation based on the measurement results is performed, with the result of the Comparative Example (Conventional Example 1) being defined as the reference (100). For this evaluation as well, higher numerical values indicate higher performance.

In FIG. 36, the term "angle α (second belt region)" refers to the angle α of the tip 35 of the stud pin 30 disposed in the second belt region B2 described in the embodiments above. The term "angle α (first belt region)" refers to the angle α of the tip 35 of the stud pin 30 disposed in the first belt region B1 described in the embodiments above.

In FIG. 36, the term "tip direction" refers to the angle of inclination of the tip 35 with respect to the reference imaginary line Lr described in the embodiments above. The term "parallel" means that the angle α is 0°. The term "orthogonal" means that the angle α is 90°. The term "inclined to the trailing side" indicates that the tip imaginary line Lt of the tip 35 of the stud pin 30, such as that described while referring to FIGS. 3, 9, or the like, is disposed inclined to the trailing side of the tread portion 3 from the center portion C side toward the edge portion T side. The term "inclined to the leading side" indicates that the tip imaginary line Lt of the tip 35 of the stud pin 30, such as that described while referring to FIGS. 24, 25, or the like, is disposed inclined to the leading side of the tread portion 3 from the center portion C side toward the edge portion T side.

The tire 1 of Conventional Example 1 is a tire that is provided with the stud pin 30 including the rectangular tip 35, but the angle α of the tip 35 is 0°.

The tire 1 of Conventional Example 2 is a tire that is provided with the stud pin 30 including the rectangular tip 35, and specifically is a tire such as that described in Japanese Unexamined Patent Application No. 2008-284922A, which includes both the stud pin 30 for which the angle α of the tip 35 is 0° and the stud pin 30 for which the angle α of the tip 35 is 90°.

When the braking performance on ice of Conventional Example 1 is set to 100, the braking performance on ice of Conventional Example 2 is 97, inferior to the braking performance on ice of Conventional Example 1. When the turning braking performance of Conventional Example 1 is set to 100, the turning performance on ice of Conventional Example 2 is 105 and advantageous effects of the stud pin 30 including the tip 35 for which the angle α is 90° are obtained.

Examples 1 to 11 are tires 1 in which the tip 35 is inclined to the trailing side. Example 12 is a tire 1 in which the tip 35 is inclined to the leading side.

As shown in Examples 1 to 12, it is clear that, compared to the tire 1 of Conventional Example 1, both braking performance on ice and turning performance on ice are enhanced in the tires 1 that include the stud pin 30 of the tip 35 inclined to at least one of the leading side and the trailing side.

In Example 1, the angle α of the tip 35 is 5°, and is less than 10°. In Example 11, the angle α of the tip 35 is 70°, and is greater than 60°. In Examples 2, 3, 4, 5, 6, 7, 8, 9, 10, and 12, the angle a of the tip 35 is not less than 10° and not greater than 60°. It is clear that both braking performance on ice and turning performance on ice are enhanced with good balance as a result of setting the angle α of the tip 35 to not less than 10° and not greater than 60°.

Additionally, in Examples 4, 5, 6, 7, 8, and 12, at least one of the angle α of the tip 35 disposed in the first belt region B1 and the angle α of the tip 35 disposed in the second belt region B2 is not less than 25° and not greater than 45°. It is clear that both braking performance on ice and turning performance on ice are further enhanced as a result of setting the angle α of the tip 35 to not less than 25° and not greater than 45°.

In Example 3, the angle α of the second belt region B2 is less than the angle α of the first belt region B1. In Example 9, the angle α of the second belt region B2 is greater than the angle α of the first belt region B1. In both Examples 3 and 9, braking performance on ice and turning performance on ice are high. It is clear that, compared to Example 3, in Example 9, braking performance on ice and turning performance on ice are enhanced with good balance and both braking performance on ice and turning performance on ice are achieved in a compatible manner.

In Examples 5, 6, and 7, the angle α of the second belt region B2 is 40°. In Example 5, the difference between the angle α of the first belt region B1 and the angle α of the second belt region B2 is 0°. In Example 6, the angle α of the second belt region B2 is greater than the angle α of the first belt region B1, and the difference between the angle α of the first belt region B1 and the angle α of the second belt region B2 is 10°. In Example 7, the angle α of the second belt region B2 is greater than the angle α of the first belt region B1, and the difference between the angle α of the first belt region B1 and the angle α of the second belt region B2 is 25°. It is clear that, compared to Example 5, in Examples 6 and 7, braking performance on ice and turning performance on ice are enhanced with good balance and both braking performance on ice and turning performance on ice are achieved in a compatible manner.

Example 5 is a tire 1 in which the tip 35 is inclined to the trailing side. Example 12 is a tire 1 in which the tip 35 is inclined to the leading side. In both Examples 5 and 12, the angle α is 40°. In both Examples 5 and 12, braking performance on ice and turning performance on ice are high. As such, it is clear that high braking performance on ice and turning performance on ice are obtained in cases where the tip 35 is inclined to the trailing side and in cases where the tip 35 is inclined to the leading side.

As is clear from the test results, with the tires 1 of Examples 1 to 12, braking performance and turning performance on icy road surfaces is enhanced.

### Reference Signs List

- 1: Tire (pneumatic tire)
- 2: Ground contact surface
- 3: Tread portion
- 4: Bead portion
- 5: Sidewall portion
- 6: Carcass
- 7: Inner liner
- 8: Center region
- 9: Shoulder region
- 11: Bead core
- 12: Bead filler
- 14: Belt
- 15: Tread rubber
- 16: Sidewall rubber
- 20: Groove
- 21: Main groove
- 22: Lug groove
- 23: Block
- 24: Hole
- 25: Bottom surface
- 26: Opening
- 30: Stud pin
- 31: Bottom flange portion
- 31C: Side surface
- 31T: Top surface (second surface)
- 31U: Bottom surface (first surface)
- 32: Upper flange portion
- 32C: Side surface
- 32T: Top surface (third surface)
- 32U: Bottom surface (fourth surface)
- 33: Middle portion
- 33C: Side surface
- 34: Body
- 35: Tip
- 41: Edge portion
- 42: Edge portion
- 50: Edge
- 51: Longest line portion
- 52: Short line portion
- 53: Leading corner portion
- 101: Leading portion
- 102: Trailing portion
- AX: Center axis
- B1: First belt region
- B2: Second belt region
- C: Center portion
- CL: Center line
- D: Middle portion
- D1: Middle portion
- D2: Middle portion
- H: Half region
- H1: First half region
- H2: Second half region
- J: Center axis
- Lt: Tip imaginary line
- Lr: Reference imaginary line
- OD: Tire outer diameter
- RD: Tire rim diameter
- SW: Total tire width
- T: Edge portion
- T1: Edge portion
- T2: Edge portion
- UX: Symmetry axis
- W: Tread ground contact width
- TDW: Developed tread width
- α: Angle
- α1: Angle
- α2: Angle
- β1: Angle
- β2: Angle

## Claims

1. A pneumatic tire (1) that rotates about a center axis (AX), comprising:
a tread portion (3); and
a stud pin (30) including a body (34) disposed in a hole (24) provided in the tread portion (3) and a tip (35) having a rectangular shape, the tip (35) protruding outward from a ground contact surface (2) of the tread portion (3);
the stud pin (30) being disposed such that a tip imaginary line (Lt) is inclined with respect to a reference imaginary line (Lr);
**characterized in that**
an angle α formed by the tip imaginary line (Lt) and the reference imaginary line (Lr) is not less than 10° and not greater than 50°, wherein
the tip imaginary line (Lt) is defined as a straight line parallel to a longest straight edge among the edges of the tip (35), and
the reference imaginary line (Lr) is defined as a straight line parallel to the center axis (AX) of the pneumatic tire (1).

2. The pneumatic tire (1) according to claim 1, wherein:
the angle α is not less than 25° and not greater than 45°.

3. The pneumatic tire (1) according to claim 1 or 2, wherein:
an external form of the tip (35) has line symmetry with respect to a symmetry axis (UX); and
the tip imaginary line (Lt) is orthogonal to the symmetry axis (UX).

4. The pneumatic tire (1) according to any one of claims 1 to 3, wherein:
the tread portion (3) includes a tread pattern for which a rotation direction about the center axis (AX) is specified; and
the tip imaginary line (Lt) of the stud pin (30) is disposed in a half region (H, H1, H2) of the tread portion (3) between a center portion (C) of the tread portion (3) and an edge portion (T, T1, T2) of the tread portion (3) in a direction parallel to the center axis (AX) is inclined to a trailing side of the tread portion (3) from a side of the center portion (C) toward a side of the edge portion (T, T1, T2).

5. The pneumatic tire (1) according to claim 4, wherein:
the edge (50) of the tip (35) includes a plurality of corner portions, and a plurality of line portions connected via the plurality of corner portions.

6. The pneumatic tire (1) according to claim 5, wherein:
the edge (50) of the tip (35) includes a leading corner portion (53) disposed farthest to a leading side of the tread portion (3) among the plurality of corner portions, and a short line portion (52) connected to the longest line portion (51) via the leading corner portion (53);
the longest line portion (51) is inclined to the trailing side from the side of the center portion (C) toward the side of the edge portion (T, T1, T2); and
the short line portion (52) is inclined to the trailing side from the side of the edge portion (T, T1, T2) toward the side of the center portion (C).

7. The pneumatic tire (1) according to claim 6, wherein:
an angle β1 formed by the longest line portion (51) and the reference imaginary line (Lr) is greater than an angle β2 formed by the short line portion (52) and the reference imaginary line (Lr).

8. The pneumatic tire (1) according to claim 5, wherein:
the edge (50) of the tip (35) includes a leading corner portion (53) disposed farthest to a leading side of the tread portion (3) among the plurality of corner portions, and a short line portion (52) connected to the longest line portion (51) via the leading corner portion (53);
the longest line portion (51) is inclined to the trailing side from the side of the center portion (C) toward the side of the edge portion (T, T1, T2); and the short line portion (52) is parallel to the reference imaginary line (Lr).

9. The pneumatic tire (1) according to any one of claims 4 to 8, wherein:
the half region (H, H1, H2) includes, in the direction parallel to the center axis (AX), a first belt region (B1) between the center portion (C) and a middle portion (D, D1, D2) disposed outward from the center portion (C) a dimension exactly 25% of the tread portion (3), and a second belt region (B2) between the middle portion (D, D1, D2) and the edge portion (T, T1, T2); and
the stud pin (30) is disposed in at least the second belt region (B2).

10. The pneumatic tire (1) according to any one of claims 1 to 3, wherein:
the tread portion (3) includes a tread pattern for which a rotation direction about the center axis (AX) is specified; and
the tip imaginary line (Lt) of the stud pin (30) disposed in a half region (H, H1, H2) of the tread portion (3) between a center portion (C) of the tread portion (3) and an edge portion (T, T1, T2) of the tread portion (3) in a direction parallel to the center axis (AX) is inclined to a leading side of the tread portion (3) from a side of the center portion (C) toward a side of the edge portion (T, T1, T2).

11. The pneumatic tire (1) according to claim 10, wherein:
the edge (50) of the tip (35) includes a plurality of corner portions, and a plurality of line portions connected via the plurality of corner portions.

12. The pneumatic tire (1) according to claim 11, wherein:
the edge (50) of the tip (35) includes a leading corner portion (53) disposed farthest to the leading side among the plurality of corner portions, and a short line portion (52) connected to the longest line portion (51) via the leading corner portion (53);
the longest line portion (51) is inclined to the leading side from the side of the center portion (C) toward the side of the edge portion (T, T1, T2); and
the short line portion (52) is inclined to the leading side from the side of the edge portion (T, T1, T2) toward the side of the center portion (C).

13. The pneumatic tire (1) according to claim 12, wherein:
an angle β1 formed by the longest line portion (51) and the reference imaginary line (Lr) is greater than an angle β2 formed by the short line portion (52) and the reference imaginary line (Lr).

14. The pneumatic tire (1) according to claim 11, wherein:
the edge (50) of the tip (35) includes a leading corner portion (53) disposed farthest to the leading side among the plurality of corner portions, and a short line portion (52) connected to the longest line portion (51) via the leading corner portion (53);
the longest line portion (51) is inclined to the leading side from the side of the center portion (C) toward the side of the edge portion (T, T1, T2); and
the short line portion (52) is parallel to the reference imaginary line (Lr).

15. The pneumatic tire (1) according to any one of claims 10 to 14, wherein:
the half region (H, H1, H2) includes, in the direction parallel to the center axis (AX), a first belt region (B1) between the center portion (C) and a middle portion (D, D1, D2) disposed outward from the center portion (C) a dimension exactly 25% of the tread portion (3), and a second belt region (B2) between the middle portion (D, D1, D2) and the edge portion (T, T1, T2); and
the stud pin (30) is disposed in at least the second belt region (B2).

## Patentansprüche

1. Luftreifen (1), der sich um eine Mittelachse (AX) dreht, umfassend:
einen Laufflächenabschnitt (3); und
einen Spike-Zapfen (30), der einen Körper (34), der in einem im Laufflächenabschnitt (3) bereitgestellten Loch (24) angeordnet ist, und ein oberes Ende (35) einschließt, das eine rechteckige Form aufweist, wobei das obere Ende (35) von einer Bodenkontaktoberfläche (2) des Laufflächenabschnitts (3) nach außen vorsteht;
wobei der Spike-Zapfen (30) so angeordnet ist, dass eine imaginäre Linie des oberen Endes (Lt) in Bezug auf eine imaginäre Referenzlinie (Lr) schräg verläuft;
**dadurch gekennzeichnet, dass**
ein durch die imaginäre Linie des oberen Endes (Lt) und die imaginäre Referenzlinie (Lr) gebildeter Winkel nicht weniger als 10° und nicht mehr als 50° beträgt, wobei
die imaginäre Linie des oberen Endes (Lt) als eine gerade Linie parallel zu einer längsten geraden Kante von den Kanten des oberen Endes (35) definiert ist, und
die imaginäre Referenzlinie (Lr) als gerade Linie parallel zur Mittelachse (AX) des Luftreifens (1) definiert ist.

2. Luftreifen (1) nach Anspruch 1, wobei:
der Winkel α nicht weniger als 25° und nicht mehr als 45° beträgt.

3. Luftreifen (1) nach Anspruch 1 oder 2, wobei:
eine äußere Form des oberen Endes (35) eine Liniensymmetrie in Bezug auf eine Symmetrieachse (UX) aufweist; und
die imaginäre Linie des oberen Endes (Lt) orthogonal zur Symmetrieachse (UX) ist.

4. Luftreifen (1) nach einem der Ansprüche 1 bis 3, wobei:
der Laufflächenabschnitt (3) ein Laufflächenmuster einschließt, für das eine Drehrichtung um die Mittelachse (AX) spezifiziert ist; und
die imaginäre Linie des oberen Endes (Lt) des Spike-Zapfens (30) in einer Richtung parallel zu der Mittelachse (AX) in einem halben Bereich (H, H1, H2) des Laufflächenabschnitts (3) zwischen einem Mittelabschnitt (C) des Laufflächenabschnitts (3) und einem Randabschnitt (T, T1, T2) des Laufflächenabschnitts (3) angeordnet ist, von einer Seite des Mittelabschnitts (C) in Richtung zu einer Seite des Randabschnitts (T, T1, T2) zu einer in Laufrichtung hinteren Seite des Laufflächenabschnitts (3) hin schräg verläuft.

5. Luftreifen (1) nach Anspruch 4, wobei:
der Rand (50) des oberen Endes (35) eine Vielzahl von Eckabschnitten und eine Vielzahl von Linienabschnitten einschließt, die über die Vielzahl von Eckabschnitten verbunden sind.

6. Luftreifen (1) nach Anspruch 5, wobei:
der Rand (50) des oberen Endes (35) einen in Laufrichtung vorderen Eckabschnitt (53), der von der Vielzahl von Eckabschnitten am weitesten zu einer in Laufrichtung vorderen Seite des Laufflächenabschnitts (3) hin angeordnet ist, und einen kurzen Linienabschnitt (52), der über den in Laufrichtung vorderen Eckabschnitt (53) mit dem längsten Linienabschnitt (51) verbunden ist, einschließt;
der längste Linienabschnitt (51) von der Seite des Mittelabschnitts (C) in Richtung der Seite des Randabschnitts (T, T1, T2) zu der in Laufrichtung hinteren Seite hin schräg verläuft; und der kurze Linienabschnitt (52) von der Seite des Randabschnitts (T, T1, T2) in Richtung der Seite des Mittelabschnitts (C) zu der in Laufrichtung hinteren Seite hin schräg verläuft.

7. Luftreifen (1) nach Anspruch 6, wobei:
ein Winkel β1, der durch den längsten Linienabschnitt (51) und die imaginäre Referenzlinie (Lr) gebildet wird, größer ist als ein Winkel β2, der durch den kurzen Linienabschnitt (52) und die imaginäre Referenzlinie (Lr) gebildet wird.

8. Luftreifen (1) nach Anspruch 5, wobei:
der Rand (50) des oberen Endes (35) einen in Laufrichtung vorderen Eckabschnitt (53), der von der Vielzahl von Eckabschnitten am weitesten zu einer in Laufrichtung vorderen Seite des Laufflächenabschnitts (3) hin angeordnet ist, und einen kurzen Linienabschnitt (52), der über den in Laufrichtung vorderen Eckabschnitt (53) mit dem längsten Linienabschnitt (51) verbunden ist, einschließt;
der längste Linienabschnitt (51) von der Seite des Mittelabschnitts (C) in Richtung der Seite des Randabschnitts (T, T1, T2) zu der in Laufrichtung hinteren Seite hin schräg verläuft; und der kurze Linienabschnitt (52) parallel zu der imaginären Referenzlinie (Lr) ist.

9. Luftreifen (1) nach einem der Ansprüche 4 bis 8, wobei:
der halbe Bereich (H, H1, H2) in der Richtung parallel zu der Mittelachse (AX) einen ersten Gürtelbereich (B1), der zwischen dem Mittelabschnitt (C) und einem mittleren Abschnitt (D, D1, D2), der auswärts vom Mittelabschnitt (C) angeordnet ist, eine Abmessung von exakt 25 % des Laufflächenabschnitts (3) aufweist, und einen zweiten Gürtelbereich (B2) zwischen dem mittleren Abschnitt (D, D1, D2) und dem Randabschnitt (T, T1, T2) einschließt; und
der Spike-Zapfen (30) in zumindest dem zweiten Gürtelbereich (B2) angeordnet ist.

10. Luftreifen (1) nach einem der Ansprüche 1 bis 3, wobei:
der Laufflächenabschnitt (3) ein Laufflächenmuster einschließt, für das eine Drehrichtung um die Mittelachse (AX) spezifiziert ist; und
die imaginäre Linie des oberen Endes (Lt) des Spike-Zapfens (30), die in einer Richtung parallel zu der Mittelachse (AX) in einem halben Bereich (H, H1, H2) des Laufflächenabschnitts (3) zwischen einem Mittelabschnitt (C) des Laufflächenabschnitts (3), und einem Randabschnitt (T, T1, T2) des Laufflächenabschnitts (3) angeordnet ist, von einer Seite des Mittelabschnitts (C) zu einer Seite des Randabschnitts (T, T1, T2) in Richtung zu einer in Laufrichtung vorderen Seite des Laufflächenabschnitts (3) schräg verläuft.

11. Luftreifen (1) nach Anspruch 10, wobei:
der Rand (50) des oberen Endes (35) eine Vielzahl von Eckabschnitten und eine Vielzahl von Linienabschnitten einschließt, die über die Vielzahl von Eckabschnitten verbunden sind.

12. Luftreifen (1) nach Anspruch 11, wobei:
der Rand (50) des oberen Endes (35) einen in Laufrichtung vorderen Eckabschnitt (53), der von der Vielzahl von Eckabschnitten am weitesten zu einer in Laufrichtung vorderen Seite hin angeordnet ist, und einen kurzen Linienabschnitt (52), der über den in Laufrichtung vorderen Eckabschnitt (53) mit dem längsten Linienabschnitt (51) verbunden ist, einschließt;
der längste Linienabschnitt (51) von der Seite des Mittelabschnitts (C) in Richtung der Seite des Randabschnitts (T, T1, T2) zu der in Laufrichtung vorderen Seite hin schräg verläuft; und der kurze Linienabschnitt (52) von der Seite des Randabschnitts (T, T1, T2) in Richtung der Seite des Mittelabschnitts (C) zu der in Laufrichtung vorderen Seite hin schräg verläuft.

13. Luftreifen (1) nach Anspruch 12, wobei:
ein Winkel β1, der durch den längsten Linienabschnitt (51) und die imaginäre Referenzlinie (Lr) gebildet wird, größer ist als ein Winkel β2, der durch den kurzen Linienabschnitt (52) und die imaginäre Referenzlinie (Lr) gebildet wird.

14. Luftreifen (1) nach Anspruch 11, wobei:
der Rand (50) des oberen Endes (35) einen in Laufrichtung vorderen Eckabschnitt (53), der von der Vielzahl von Eckabschnitten am weitesten zu einer in Laufrichtung vorderen Seite hin angeordnet ist, und einen kurzen Linienabschnitt (52), der über den in Laufrichtung vorderen Eckabschnitt (53) mit dem längsten Linienabschnitt (51) verbunden ist, einschließt;
der längste Linienabschnitt (51) von der Seite des Mittelabschnitts (C) in Richtung der Seite des Randabschnitts (T, T1, T2) zu der in Laufrichtung vorderen Seite hin schräg verläuft; und der kurze Linienabschnitt (52) parallel zu der imaginären Referenzlinie (Lr) ist.

15. Luftreifen (1) nach einem der Ansprüche 10 bis 14, wobei:
der halbe Bereich (H, H1, H2) in der Richtung parallel zu der Mittelachse (AX) einen ersten Gürtelbereich (B1) zwischen dem Mittelabschnitt (C) und einem mittleren Abschnitt (D, D1, D2), der auswärts vom Mittelabschnitt (C) angeordnet ist, eine Abmessung von exakt 25 % des Laufflächenabschnitts (3) einnimmt, und einen zweiten Gürtelbereich (B2) zwischen dem mittleren Abschnitt (D, D1, D2) und dem Randabschnitt (T, T1, T2) einschließt; und
der Spike-Zapfen (30) in zumindest dem zweiten Gürtelbereich (B2) angeordnet ist.

## Revendications

1. Pneumatique (1) qui tourne autour d'un axe central (AX), comprenant :
une partie de bande de roulement (3) ; et
une broche de goujon (30) incluant un corps (34) disposé dans un trou (24) pratiqué dans la partie de bande de roulement (3) et un embout (35) ayant une forme rectangulaire, l'embout (35) faisant saillie vers l'extérieur depuis une surface d'appui au sol (2) de la partie de bande de roulement (3) ;
la broche de goujon (30) étant disposée de telle sorte qu'une ligne imaginaire d'embout (Lt) est inclinée par rapport à une ligne imaginaire de référence (Lr) ;
**caractérisé en ce que**
un angle α formé par la ligne imaginaire d'embout (Lt) et la ligne imaginaire de référence (Lr) n'est pas inférieur à 10° et n'est pas supérieur à 50°, dans lequel
la ligne imaginaire d'embout (Lt) est définie comme une ligne droite parallèle à un bord droit le plus long parmi les bords de l'embout (35), et
la ligne imaginaire de référence (Lr) est définie comme une ligne droite parallèle à l'axe central (AX) du pneumatique (1).

2. Pneumatique (1) selon la revendication 1, dans lequel :
l'angle α n'est pas inférieur à 25° et n'est pas supérieur à 45°.

3. Pneumatique (1) selon la revendication 1 ou 2, dans lequel :
la forme extérieure de l'embout (35) a une symétrie axiale par rapport à un axe de symétrie (UX) ; et
la ligne imaginaire d'embout (Lt) est orthogonale à l'axe de symétrie (UX).

4. Pneumatique (1) selon l'une quelconque des revendications 1 à 3, dans lequel :
la partie de bande de roulement (3) inclut un motif de bande de roulement pour lequel une direction de rotation autour de l'axe central (AX) est spécifiée ; et
la ligne imaginaire d'embout (Lt) de la broche de goujon (30) est disposée dans une demi-région (H, H1, H2) de la partie de bande de roulement (3) entre une partie centrale (C) de la partie de bande de roulement (3) et une partie de bord (T, T1, T2) de la partie de bande de roulement (3) dans une direction parallèle à l'axe central (AX) est inclinée vers un côté arrière de la partie de bande de roulement (3) depuis un côté de la partie centrale (C) vers un côté de la partie de bord (T, T1, T2).

5. Pneumatique (1) selon la revendication 4, dans lequel :
le bord (50) de l'embout (35) inclut une pluralité de parties d'angle, et une pluralité de parties de ligne connectées par le biais de la pluralité de parties d'angle.

6. Pneumatique (1) selon la revendication 5, dans lequel :
le bord (50) de l'embout (35) inclut une partie d'angle d'attaque (53) disposée la plus éloignée d'un côté avant de la partie de bande de roulement (3) parmi la pluralité de parties d'angle, et une partie de ligne courte (52) connectée à la partie de ligne la plus longue (51) par le biais de la partie d'angle d'attaque (53) ;
la partie de ligne la plus longue (51) est inclinée vers le côté arrière depuis le côté de la partie centrale (C) vers le côté de la partie de bord (T, T1, T2) ; et la partie de ligne courte (52) est inclinée vers le côté arrière depuis le côté de la partie de bord (T, T1, T2) vers le côté de la partie centrale (C).

7. Pneumatique (1) selon la revendication 6, dans lequel :
un angle β1 formé par la partie de ligne la plus longue (51) et la ligne imaginaire de référence (Lr) est supérieur à un angle β2 formé par la partie de ligne courte (52) et la ligne imaginaire de référence (Lr).

8. Pneumatique (1) selon la revendication 5, dans lequel :
le bord (50) de l'embout (35) inclut une partie d'angle d'attaque (53) disposée la plus éloignée d'un côté avant de la partie de bande de roulement (3) parmi la pluralité de parties d'angle, et une partie de ligne courte (52) connectée à la partie de ligne la plus longue (51) par le biais de la partie d'angle d'attaque (53) ;
la partie de ligne la plus longue (51) est inclinée vers le côté arrière depuis le côté de la partie centrale (C) vers le côté de la partie de bord (T, T1, T2) ; et la partie de ligne courte (52) est parallèle à la ligne imaginaire de référence (Lr).

9. Pneumatique (1) selon l'une quelconque des revendications 4 à 8, dans lequel :
la demi-région (H, H1, H2) inclut, dans la direction parallèle à l'axe central (AX), une première région de courroie (B1) entre la partie centrale (C) et une partie intermédiaire (D, D1, D2) disposée à l'extérieur de la partie centrale (C) une dimension exactement à 25 % de la partie de bande de roulement (3), et une deuxième région de courroie (B2) entre la partie intermédiaire (D, D1, D2) et la partie de bord (T, T1, T2) ; et
la broche de goujon (30) est disposée dans au moins la deuxième région de courroie (B2).

10. Pneumatique (1) selon l'une quelconque des revendications 1 à 3, dans lequel :
la partie de bande de roulement (3) inclut un motif de bande de roulement pour lequel une direction de rotation autour de l'axe central (AX) est spécifiée ; et
la ligne imaginaire d'embout (Lt) de la broche de goujon (30) disposée dans une demi-région (H, H1, H2) de la partie de bande de roulement (3) entre une partie centrale (C) de la partie de bande de roulement (3) et une partie de bord (T, T1, T2) de la partie de bande de roulement (3) dans une direction parallèle à l'axe central (AX) est inclinée vers un côté avant de la partie de bande de roulement (3) depuis un côté de la partie centrale (C) vers un côté de la partie de bord (T, T1, T2).

11. Pneumatique (1) selon la revendication 10, dans lequel :
le bord (50) de l'embout (35) inclut une pluralité de parties d'angle, et une pluralité de parties de ligne connectées par le biais de la pluralité de parties d'angle.

12. Pneumatique (1) selon la revendication 11, dans lequel :
le bord (50) de l'embout (35) inclut une partie d'angle d'attaque (53) disposée la plus éloignée du côté avant parmi la pluralité de parties d'angle, et une partie de ligne courte (52) connectée à la partie de ligne la plus longue (51) par le biais de la partie d'angle d'attaque (53) ;
la partie de ligne la plus longue (51) est inclinée vers le côté avant depuis le côté de la partie centrale (C) vers le côté de la partie de bord (T, T1, T2) ; et la partie de ligne courte (52) est inclinée vers le côté avant depuis le côté de la partie de bord (T, T1, T2) vers le côté de la partie centrale (C).

13. Pneumatique (1) selon la revendication 12, dans lequel :
un angle β1 formé par la partie de ligne la plus longue (51) et la ligne imaginaire de référence (Lr) est supérieur à un angle β2 formé par la partie de ligne courte (52) et la ligne imaginaire de référence (Lr).

14. Pneumatique (1) selon la revendication 11, dans lequel :
le bord (50) de l'embout (35) inclut une partie d'angle d'attaque (53) disposée la plus éloignée du côté avant parmi la pluralité de parties d'angle, et une partie de ligne courte (52) connectée à la partie de ligne la plus longue (51) par le biais de la partie d'angle d'attaque (53) ;
la partie de ligne la plus longue (51) est inclinée vers le côté avant depuis le côté de la partie centrale (C) vers le côté de la partie de bord (T, T1, T2) ; et la partie de ligne courte (52) est parallèle à la ligne imaginaire de référence (Lr).

15. Pneumatique (1) selon l'une quelconque des revendications 10 à 14, dans lequel :
la demi-région (H, H1, H2) inclut, dans la direction parallèle à l'axe central (AX), une première région de courroie (B1) entre la partie centrale (C) et une partie intermédiaire (D, D1, D2) disposée à l'extérieur de la partie centrale (C) une dimension exactement à 25 % de la partie de bande de roulement (3), et une deuxième région de courroie (B2) entre la partie intermédiaire (D, D1, D2) et la partie de bord (T, T1, T2) ; et
la broche de goujon (30) est disposée dans au moins la deuxième région de courroie (B2).
